# EUROPÄISCHE PATENTSCHRIFT

(11) **EP 3 130 165 B1**
(45) Veröffentlichungstag und Bekanntmachung des Hinweises auf die Patenterteilung: **07.11.2018**
(21) Anmeldenummer: 15714777.8
(22) Anmeldetag: 26.03.2015
(51) Int. Cl.: H04W 12/06, H04W 4/00, H04L 29/06, H04L 29/08, G06Q 20/10

(54) **BEREITSTELLEN EINER VIRTUELLEN VERBINDUNG ZUM ÜBERTRAGEN VON ANWENDUNGSDATENEINHEITEN**
PROVISIONING A VIRTUAL CONNEXION FOR APPLICATION DATA UNITS TRANSMISSION
MISE EN PLACE D'UNE CONNECTION VIRTUELLE POUR TRANSMETTRE DES UNITÉS DE DONNÉES D'APPLICATION

(30) Priorität: 07.04.2014 DE 102014004917
(43) Veröffentlichungstag der Anmeldung: 15.02.2017
(73) Patentinhaber: certgate GmbH, 90409 Nürnberg (DE)
(72) Erfinder: WANG, Jian, Chengdu Sichuan 610041 (CN); BECKER, Martin, 91207 Lauf an der Pegnitz (DE)
(74) Vertreter: Cohausz & Florack
(86) Internationale Anmeldenummer: PCT/EP2015/056494
(87) Internationale Veröffentlichungsnummer: WO 2015/155016

(56) Entgegenhaltungen:
- WO-A1-2013/189245
- GB-A- 2 366 163
- US-A1- 2013 111 546

## Beschreibung

### Gebiet der Erfindung

Die vorliegende Erfindung betrifft unter anderem ein Verfahren zum Bereitstellen einer virtuellen Verbindung zum Übertragen von Anwendungsdateneinheiten.

### Hintergrund der Erfindung

Im Stand der Technik sind Verfahren bekannt, um eine direkte Verbindung zwischen einer ersten Datenverarbeitungsanlage und einer mit einer zweiten Datenverarbeitungsanlage verbundenen Chipkarte herzustellen. Je nach Netzwerkkonfiguration sind solche direkten Verbindungen zwischen einer ersten Datenverarbeitungsanlage und einer zweiten Datenverarbeitungsanlage jedoch unmöglich, beispielsweise wenn eine Konfiguration einer Firewall eine solche direkte Verbindung verhindert. Ferner ist der Zugriff auf eine Vielzahl von Chipkarten über solche direkte Verbindungen sehr aufwändig, da für jede Chipkarte eine eigene direkte Verbindung aufgebaut werden muss.

Aus der Veröffentlichung der US-Patentanmeldung US 2013/0111546 A1 sind Systeme, Verfahren und Computerprogrammprodukte zum Durchführen von Content-Management-Abläufen bekannt, bei denen ein zentraler Trusted Service Manager (TSM) als Schnittstelle zwischen Service Providern (SP) und SP TSMs und sicheren Elementen (z.B. Universal Integrated Circuit Cards, UICC) dient. Gemäß der US 2013/0111546 A1 können Command Application Protocol Data Units (Command APDUs) von einem SP TSM mit Hilfe des zentralen TSMs an ein sicheres Element, beispielsweise zum Personalisieren einer Anwendung des sicheren Elements, gesendet und anschließend von diesem sicheren Element ausgeführt werden.

Eine ähnliche Offenbarung enthalten die Veröffentlichungen der koreanischen Patentanmeldung KR 2013 0079259 A und der europäischen Patentanmeldung EP 2 800 311 A1, die jeweils die Bereitstellung eines Master TSMs betreffen. Der Master TSM kann gemäß der EP 2 800 311 A1 zwischen einem ersten TSM und einem zweiten TSM oder einer ersten mit dem ersten TSM verbundenen Entität und einer zweiten mit dem zweiten TSM verbundenen Entität vermitteln. Hierzu weist der Master TSM ein Schnittstellenmodul, das mit einer Vielzahl von TSMs kommunizieren kann, und ein Managementmodul auf.

### Zusammenfassung einiger beispielhafter Ausgestaltungen der vorliegenden Erfindung

Eine Aufgabe der vorliegenden Erfindung ist es deshalb, die oben genannten Nachteile zu überwinden.

Diese Aufgabe wird gelöst durch den Gegenstand der unabhängigen Ansprüche 1, 14 und 15. Vorteilhafte beispielhafte Ausgestaltungen der Erfindung sind den abhängigen Ansprüchen zu entnehmen.

Ein erstes erfindungsgemäßes Verfahren entspricht dem Verfahren gemäß dem unabhängigen Anspruch 1.

Ein zweites Verfahren im Zusammenhang mit der Erfindung (im Folgenden auch als zweites erfindungsgemäßes Verfahren bezeichnet) umfasst das Authentisieren eines ersten Clients durch den ersten Client gegenüber einem Server, und das Senden eines Datenpakets mit einer Steuer-Anwendungsdateneinheit von dem ersten Client an den Server und/oder das Empfangen eines Datenpakets mit einer Antwort-Anwendungsdateneinheit von dem Server an dem ersten Client.

Ein drittes Verfahren im Zusammenhang mit der Erfindung (im Folgenden auch als drittes erfindungsgemäßes Verfahren bezeichnet) umfasst das Authentisieren eines zweiten Clients durch den zweiten Client gegenüber einem Server, und das Empfangen eines Datenpakets mit einer Steuer-Anwendungsdateneinheit von dem Server an dem zweiten Client und/oder das Senden eines Datenpakets mit einer Antwort-Anwendungsdateneinheit von dem zweiten Client an den Server.

Ein viertes Verfahren im Zusammenhang mit der Erfindung (im Folgenden auch als viertes erfindungsgemäßes Verfahren bezeichnet) zum Bereitstellen einer virtuellen Verbindung zum Übertragen von Anwendungsdateneinheiten umfasst die Schritte des ersten erfindungsgemäßen Verfahrens, die zum Beispiel auf einem Server ablaufen, die Schritte des zweiten erfindungsgemäßen Verfahrens, die zum Beispiel auf einem ersten Client ablaufen, und die Schritte des dritten erfindungsgemäßen Verfahrens, die zum Beispiel auf einem zweiten Client ablaufen. Die Schritte des ersten, des zweiten und des dritten erfindungsgemäßen Verfahrens sollen somit vorzugsweise als korrespondierende Schritte des vierten erfindungsgemäßen Verfahrens zum Bereitstellen einer virtuellen Verbindung zum Übertragen von Anwendungsdateneinheiten verstanden werden, die beispielsweise in einem System, umfassend den Server, den ersten Client und den zweiten Client, ablaufen können.

Zum Beispiel betreffen die erfindungsgemäßen Verfahren jeweils denselben Server, dieselben ersten Clients und dieselben zweiten Clients. Der erste Client des zweiten erfindungsgemäßen Verfahrens ist zum Beispiel einer dieser ersten Clients, und der zweite Client des dritten erfindungsgemäßen Verfahrens ist zum Beispiel einer dieser zweiten Clients. Die ersten Clients, die zweiten Clients und der Server sind zum Beispiel voneinander verschiedene Datenverarbeitungsanlagen. Vorzugsweise ist der Server eine erfindungsgemäße Servervorrichtung. Ferner ist jeder der ersten Clients vorzugsweise jeweils ein erster erfindungsgemäßer Client, und jeder der zweiten Clients ist vorzugsweise jeweils ein zweiter erfindungsgemäßer Client.

In der folgenden Offenbarung wird meist auf mehrere erste und mehrere zweite Clients Bezug genommen. Diese Offenbarung stellt lediglich eine Vereinfachung dar und soll nicht als Beschränkung verstanden werden. Die Offenbarung einer Mehrzahl von Clients soll demnach - soweit sinnvoll - stets auch als Offenbarung eines einzelnen Clients verstanden werden.

Der Server ist zum Beispiel mit den ersten Clients und den zweiten Clients verbunden. Beispielsweise ist der Server mit den ersten Clients und den zweiten Clients über ein oder mehrere Netzwerke verbunden. Beispiele für ein Netzwerk sind ein lokales Netzwerk (LAN) wie ein Ethernet-Netzwerk oder ein IEEE 802-Netzwerk, ein Weitverkehrsnetzwerk (WAN), ein globales Netzwerk (global area network, GAN), ein drahtloses Netzwerk, ein drahtgebundenes Netzwerk, ein Mobilfunknetzwerk, ein Telefonnetzwerk und/oder das Internet. Zum Beispiel ist der Server zumindest teilweise über das Internet mit den ersten Clients und den zweiten Clients verbunden.

Die Verbindung zwischen dem Server und den ersten Clients und den zweiten Clients kann verbindungslos oder verbindungsorientiert sein. Zwischen jedem der Clients und dem Server besteht zum Beispiel jeweils eine Netzwerkverbindung.

Zum Beispiel besteht keine direkte Verbindung zwischen den ersten und den zweiten Clients. Zum Beispiel sind die ersten Clients und/oder die zweiten Clients Teil eines Netzwerks oder mehrerer Netzwerke. Zum Beispiel sind die ersten Clients und/oder die zweiten Clients zumindest teilweise jeweils über eine Firewall (z.B. eine Software-Firewall und/oder eine Hardware-Firewall) und/oder einen Router mit dem Internet verbunden ist. Zum Beispiel verhindert die Firewall und/oder der Router eine direkte Netzwerkverbindung zwischen den ersten Clients und den zweiten Clients.

Unter einem Server soll insbesondere eine Datenverarbeitungsanlage verstanden werden, die softwaremäßig und/oder hardwaremäßig eingerichtet ist, um anderen Datenverarbeitungsanlagen einen Dienst wie eine Anwendungsdateneinheit-Vermittlung bereitzustellen. Unter einem Client soll insbesondere eine Datenverarbeitungsanlage verstanden werden, die softwaremäßig und/oder hardwaremäßig eingerichtet ist, um einen von einem Server bereitgestellten Dienst wie eine Anwendungsdateneinheit-Vermittlung zu nutzen.

Zum Beispiel authentisieren sich die ersten Clients und die zweiten Clients gegenüber dem Server jeweils mit mindestens einem Kommando, das die für die Authentisierung benötigten Informationen umfasst (z.B. einen Benutzernamen und ein Passwort). Unter Authentisieren der ersten Clients gegenüber dem Server soll beispielsweise verstanden werden, dass sich die ersten Clients jeweils beim Server anmelden. Unter Authentisieren der zweiten Clients gegenüber dem Server soll beispielsweise verstanden werden, dass sich die zweiten Clients jeweils beim Server anmelden. Beispielsweise melden sich die ersten Clients und/oder die zweiten Clients beim Server an, um die vom Server bereitgestellte Anwendungsdateneinheit-Vermittlung zu nutzen. Zum Beispiel dürfen nur beim Server angemeldete Clients die Anwendungsdateneinheit-Vermittlung benutzen. Zum Beispiel senden die ersten Clients und/oder die zweiten Clients Anmeldeinformationen an den Server (z.B. über eine jeweilige Netzwerkverbindung). Zum Beispiel senden die ersten Clients und/oder die zweiten Clients die Anmeldeinformationen als Kommando an den Server (z.B. über eine jeweilige Netzwerkverbindung). Die Anmeldeinformationen sind zum Beispiel für jeden der Clients oder eine Gruppe von Clients individualisiert. Es ist jedoch auch denkbar, dass die Anmeldeinformationen für alle Clients gleich sind. Zum Beispiel umfassen die Anmeldeinformationen einen eindeutigen Bezeichner wie einen Benutzernamen (z.B. eine E-Mail-Adresse, eine Kundenummer oder eine Registrierungsnummer), ein Passwort, ein Authentisierungsmerkmal, ein biometrisches Merkmal und/oder einen eindeutigen Identifikator des jeweiligen Clients (z.B. eine Media-Access-Control-Adresse oder eine International Mobile Subscriber Identity).

Die Anmeldeinformationen können zumindest teilweise von einem Benutzer an den ersten und/oder zweiten Clients eingegeben und/oder zumindest teilweise durch die ersten und/oder zweiten Clients eingelesen werden. Zum Beispiel kann ein Benutzer jeweils einen Benutzernamen und ein Passwort an den ersten und/oder zweiten Clients als Anmeldeinformationen eingeben. Zum Beispiel können die ersten und/oder zweiten Clients jeweils ein Authentisierungsmerkmal von einem Sicherheitstoken wie einer mit dem jeweiligen Client verbundenen Chipkarte und/oder ein biometrisches Merkmal eines Benutzers als Anmeldeinformationen einlesen.

Unter Authentifizieren der ersten Clients und der zweiten Clients durch den Server soll beispielsweise verstanden werden, dass der Server überprüft, ob die ersten Clients und die zweiten Clients für eine Anmeldung am Server autorisiert sind. Beispielsweise überprüft der Server, ob die ersten Clients und/oder die zweiten Clients jeweils für eine Nutzung der vom Server bereitgestellten Anwendungsdateneinheit-Vermittlung autorisiert sind. Beispielsweise dürfen nur Clients, die durch den Server authentifiziert und/oder am Server angemeldet sind, die vom Server bereitgestellte Anwendungsdateneinheit-Vermittlung nutzen.

Zum Beispiel hat der Server Zugriff auf entsprechende Autorisierungsinformationen. Zum Beispiel umfassen die Autorisierungsinformationen zu den Anmeldeinformationen korrespondierende Informationen, beispielsweise einen eindeutigen Bezeichner wie einen Benutzernamen (z.B. eine E-Mail-Adresse, eine Kundenummer oder eine Registrierungsnummer), ein Passwort, ein Authentisierungsmerkmal, ein biometrisches Merkmal und/oder einen eindeutigen Identifikator des jeweiligen Clients (z.B. eine Media-Access-Control-Adresse oder eine International Mobile Subscriber Identity). Ferner können die Autorisierungsinformationen eine Information umfassen, ob der jeweilige Client für die Benutzung der zumindest einen Anwendungsdateneinheit-Vermittlung autorisiert ist.

Die Autorisierungsinformationen können in einer Datenbank wie beispielsweise einem Verzeichnisdienst gespeichert sein. Zum Beispiel sind die Autorisierungsinformationen in einem Speicher des Servers gespeichert. Zum Beispiel sind die Autorisierungsinformationen in einem Speicher außerhalb des Servers gespeichert, auf den der Server zugreifen kann (z.B. in einem Speicher eines Datenbankservers auf den der Server über ein Netzwerk zugreifen kann).

Es sind somit verschiedene Möglichkeiten zum Authentifizieren der ersten Clients und der zweiten Clients durch den Server denkbar. Zum Beispiel können ein oder mehrere Zugriffskontrollmittel des Servers eingerichtet sein, die ersten Clients und die zweiten Clients zu authentifizieren. Zum Beispiel sind die Zugriffskontrollmittel austauschbar. Die Zugriffskontrollmittel können in Software und/oder Hardware ausgebildet sein. Zum Beispiel umfassen die Zugriffskontrollmittel zumindest einen Prozessor und zumindest einen Speicher mit Programmanweisungen, wobei der zumindest eine Speicher und die Programmanweisungen konfiguriert sind, um, zusammen mit dem zumindest einen Prozessor, den Server zu veranlassen, die ersten Clients und die zweiten Clients zu authentifizieren. Zum Beispiel sind die Zugriffskontrollmittel als Zugriffskontrollmodul (Access-Control-Modul, ACM) ausgebildet, das beispielsweise per Plugin-Konzept am Server getauscht werden kann. Dies ist beispielsweise vorteilhaft, um einen einfachen Austausch des Zugriffskontrollmoduls und somit eine unkomplizierte Anpassung des Authentifizierens der ersten Clients und der zweiten Clients durch den Server zu ermöglichen, ohne dass beispielsweise die Programmierung des Servers (z.B. ein Server-Programm) vollständig geändert werden muss. Zum Beispiel ist überhaupt keine Änderung der Programmierung des Servers (z.B. eines Server-Programms) bei einem Austausch des Zugriffskontrollmoduls notwendig. Zum Beispiel kann in dem Zugriffskontrollmodul und/oder in den Zugriffskontrollmitteln eine Datenbank mit Autorisierungsinformationen hinterlegt sein (z.B. umfasst das Zugriffskontrollmodul eine solche Datenbank). Es ist beispielsweise auch denkbar, dass ein Zugriffskontrollmodul und/oder ein Zugriffskontrollmittel Zugriff auf einen Verzeichnisdienst mit Autorisierungsinformationen hat (z.B. Zugriff auf einen Verzeichnisdienst mit Autorisierungsinformationen hat, der von einem von dem Server verschiedenen Datenbankserver bereitgestellt wird).

Zum Beispiel empfängt der Server von jedem der ersten Clients und von jedem der zweiten Clients entsprechende Anmeldeinformationen. Zum Beispiel empfängt der Server von jedem der ersten Clients und von jedem der zweiten Clients entsprechende Anmeldeinformationen über jeweilige Netzwerkverbindungen mit den Client. Der Server kann die jeweiligen Clients dann jeweils durch einen Abgleich der jeweiligen Anmeldeinformationen mit den jeweiligen Autorisierungsinformationen authentifizieren.

Unter Senden eines Datenpakets (oder Informationen) von einem Client an den Server soll beispielsweise verstanden werden, dass der Client das Datenpaket (oder die Informationen) derart absendet, dass es an dem Server erhalten werden kann. Unter Senden eines Datenpakets (oder von Informationen) von dem Server an einen oder mehrere Clients soll beispielsweise verstanden werden, dass der Server das Datenpaket (oder die Informationen) derart absendet, dass es an dem oder den Clients erhalten werden kann. Vorzugsweise wird ein Datenpaket (oder Informationen) derart gesendet, dass es über eine Netzwerkverbindung übertragen wird.

Unter Empfangen eines Datenpakets (oder von Informationen) am Server oder an einem Client soll beispielsweise verstanden werden, dass das Datenpaket (oder die Informationen) am Server oder am Client erhalten wird. Vorzugsweise wird ein Datenpaket (oder Informationen) derart empfangen, dass es über eine Netzwerkverbindung erhalten wird.

Ein Datenpaket ist beispielsweise eine Dateneinheit, deren Länge und/oder Form vorgegeben ist. Ein Datenpaket ist zum Beispiel eine Dateneinheit, die in einem Netzwerk mit einem paketvermittelten Übertragungsprotokoll übertragen wird. Zum Beispiel enthält ein Datenpakt ein Kopfdatenfeld und ein Nutzdatenfeld. Zum Beispiel enthält ein Datenpaket neben den eigentlichen Nutzdaten auch Kopfdaten mit Verwaltungsinformationen und Adressierungsinformationen. Die Kopfdaten sind zum Beispiel in dem Kopfdatenfeld (d.h. dem Header) des Datenpakets enthalten. Ein Datenpaket mit einer Anwendungsdateneinheit enthält die Anwendungsdateneinheit beispielsweise als Nutzdaten (d.h. die Anwendungsdateneinheit wird in einem Nutzdatenfeld des Datenpakets übertragen).

Eine Anwendungsdateneinheit ist beispielsweise eine Dateneinheit, deren Länge und/oder Form vorgegeben ist. Beispielsweise werden Anwendungsdateneinheiten zwischen einer Chipkartenanwendung, die von einem Prozessor einer Datenverarbeitungsanlage ausgeführt wird, und einer (z.B. unmittelbar) mit der Datenverarbeitungsanlage verbundenen Chipkarte ausgetauscht, um auf die Chipkarte zu zugreifen.

Unter Bereitstellen zumindest einer Anwendungsdateneinheit-Vermittlung durch den Server soll beispielsweise verstanden werden, dass der Server einen Dienst für zumindest eine Anwendungsdateneinheit-Vermittlung bereitstellt. Die zumindest eine vom Server bereitgestellte Anwendungsdateneinheit-Vermittlung vermittelt beispielsweise Steuer-Anwendungsdateneinheiten, die in von den ersten Clients an dem Server empfangenen Datenpaketen enthalten sind, an die zweiten Clients und Antwort-Anwendungsdateneinheiten, die in von den zweiten Clients an dem Server empfangenen Datenpaketen enthalten sind, an die ersten Clients. Die Übertragung der Anwendungsdateneinheiten zwischen den ersten Clients, dem Server und den zweiten Clients erfolgt jeweils in Datenpaketen.

Die zumindest eine durch den Server bereitgestellte Anwendungsdateneinheit-Vermittlung ist beispielsweise derart eingerichtet, dass, wenn ein Datenpaket mit einer Steuer-Anwendungsdateneinheit von einem der ersten Clients an dem Server empfangen wird, der Server ein Datenpaket mit der in dem empfangenen Datenpaket enthaltenen Steuer-Anwendungsdateneinheit an zumindest einen der zweiten Clients (zum Beispiel zumindest teilweise abhängig von einer Zuordnung zwischen den ersten und zweiten Clients) sendet. Zum Beispiel packt der Server die Steuer-Anwendungsdateneinheit aus dem empfangenen Datenpaket aus und fügt sie in ein zu sendendes Datenpaket (oder mehrere zu sendende Datenpakete) ein. Es ist jedoch auch denkbar, dass das empfangene Datenpaket und das zu sendende Datenpaket (oder die mehreren zu sendenden Datenpakete) identisch sind.

Die zumindest eine durch den Server bereitgestellte Anwendungsdateneinheit-Vermittlung ist alternativ oder zusätzlich beispielsweise derart eingerichtet, dass, wenn ein Datenpaket mit einer Antwort-Anwendungsdateneinheit von einem der zweiten Clients an dem Server empfangen wird, der Server ein Datenpaket mit der in dem empfangenen Datenpaket enthaltenen Antwort-Anwendungsdateneinheit an zumindest einen der ersten Clients (zum Beispiel zumindest teilweise abhängig von einer Zuordnung zwischen den ersten und zweiten Clients) sendet. Zum Beispiel packt der Server die Antwort-Anwendungsdateneinheit aus dem empfangenen Datenpaket aus und fügt sie in ein zu sendendes Datenpaket (oder mehrere zu sendende Datenpakete) ein. Es ist jedoch auch denkbar, dass das empfangene Datenpaket und das zu sendende Datenpaket (oder die mehreren zu sendenden Datenpakete) identisch sind.

Die zumindest eine durch den Server bereitgestellte Anwendungsdateneinheit-Vermittlung ist derart eingerichtet, dass eine am Server empfangene Anwendungsdateneinheit (also eine in einem empfangenen Datenpaket enthaltene Anwendungsdateneinheit) gemäß einer Zuordnung (z.B. einem vorgegebenen Mapping) zwischen den ersten Clients und den zweiten Clients und/oder einer Zuordnung der Anwendungsdateneinheit zu zumindest einem der ersten und/oder zweiten Clients vermittelt wird. Unter Vermitteln soll in diesem Zusammenhang beispielsweise Weiterleiten und/oder Senden (z.B. Weitersenden) verstanden werden. Durch eine solche Zuordnung wird bestimmt, welche Clients eine Anwendungsdateneinheit empfangen sollen und/oder an welche Clients der Server ein Datenpaket mit einer Anwendungsdateneinheit senden (z.B. weitersenden) soll.

Zum Beispiel ist diese Zuordnung zumindest teilweise durch Zuordnungsinformationen in der empfangenen Anwendungsdateneinheit und/oder in dem empfangenen Datenpaket, das die Anwendungsdateneinheit enthält, vorgegeben, so dass für jede Anwendungsdateneinheit eine andere Zuordnung vorgegeben werden kann. Zum Beispiel enthalten die Zuordnungsinformationen einen eindeutigen Bezeichner (z.B. einen Benutzernamen) für jeden Client, der die Anwendungsdateneinheit empfangen soll. Zum Beispiel ist die zumindest eine durch den Server bereitgestellte Anwendungsdateneinheit-Vermittlung eingerichtet, eine am Server empfangene Anwendungsdateneinheit (also eine in einem empfangenen Datenpaket enthaltene Anwendungsdateneinheit) an jeden Client zu vermitteln, dessen eindeutiger Bezeichner in den Zuordnungsinformationen enthalten ist. Zum Beispiel kennt der Server den eindeutigen Bezeichner aller am Server angemeldeten Clients. Beispielsweise ist der eindeutige Bezeichner (z.B. ein Benutzername) eines Clients in den Anmeldeinformationen des Clients enthalten.
Zum Beispiel ist diese Zuordnung alternativ oder zusätzlich zumindest teilweise in Zuordnungsinformationen in einer Datenbank gespeichert. Zum Beispiel sind die Zuordnungsinformationen in einem Speicher des Servers gespeichert. Zum Beispiel sind die Zuordnungsinformationen in einem Speicher außerhalb des Servers gespeichert, auf den der Server über eine Netzwerkverbindung zugreifen kann (z.B. in einem Speicher eines von dem Server verschiedenen Datenbankservers, der einen Verzeichnisdienst bereitstellt).

Ein Beispiel für eine Zuordnung ist beispielsweise eine Zuordnung zwischen einem ersten Client und mehreren zweiten Clients (sogenannte 1:n Zuordnung), so dass der Server alle Steuer-Anwendungsdateneinheiten von dem einen ersten Client an die mehreren zweiten Clients vermittelt und alle Antwort-Anwendungsdateneinheiten von den mehreren zweiten Clients an den einen ersten Client vermittelt. Ein weiteres Beispiel für eine Zuordnung ist beispielsweise eine Zuordnung zwischen mehreren ersten Clients und einem zweiten Client (sogenannte n:1 Zuordnung), so dass der Server alle Steuer-Anwendungsdateneinheiten von den mehreren ersten Clients an den einen zweiten Client vermittelt und alle Antwort-Anwendungsdateneinheiten von dem einen zweiten Client an die mehreren ersten Clients vermittelt. Ein weiteres Beispiel für eine Zuordnung ist beispielsweise eine Zuordnung zwischen einem ersten Client und einem zweiten Client (sogenannte 1:1 Zuordnung), so dass der Server alle Antwort-Anwendungsdateneinheiten von dem einen zweiten Client an den einen ersten Client vermittelt und alle Steuer- Anwendungsdateneinheiten von dem einen ersten Client an den einen zweiten Client vermittelt. Ein weiteres Beispiel für eine Zuordnung ist beispielsweise eine Zuordnung zwischen mehreren ersten Clients und mehreren zweiten Clients (sogenannte n:n Zuordnung), so dass der Server alle Antwort-Anwendungsdateneinheiten von den mehreren zweiten Clients an die mehreren ersten Clients vermittelt und alle Steuer-Anwendungsdateneinheiten von den mehreren ersten Clients an die mehreren zweiten Clients vermittelt.

Zum Beispiel können ein oder mehrere Anwendungsdateneinheit-Vermittlungsmittel des Servers eingerichtet sein, die Anwendungsdateneinheit-Vermittlung bereitzustellen. Zum Beispiel sind die Anwendungsdateneinheit-Vermittlungsmittel austauschbar. Die Anwendungsdateneinheit-Vermittlungsmittel können in Software und/oder Hardware ausgebildet sein. Zum Beispiel umfassen die Anwendungsdateneinheit-Vermittlungsmittel zumindest einen Prozessor und zumindest einen Speicher mit Programmanweisungen, wobei der zumindest eine Speicher und die Programmanweisungen konfiguriert sind, um, zusammen mit dem zumindest einen Prozessor, den Server zu veranlassen, die zumindest eine Anwendungsdateneinheit-Vermittlung bereitzustellen. Zum Beispiel sind die Anwendungsdateneinheit-Vermittlungsmittel als Anwendungsdateneinheit-Vermittlungsmodul ausgebildet, das beispielsweise per Plugin-Konzept am Server getauscht werden kann.

Ein erfindungsgemäßer Server umfasst ein oder mehrere Mittel zur Ausführung der Schritte des ersten erfindungsgemäßen Verfahrens (z.B. ein Zugriffskontrollmittel und/oder ein Anwendungsdateneinheit-Vermittlungsmittel). Ein erster erfindungsgemäßer Client umfasst ein oder mehrere Mittel zur Ausführung der Schritte des zweiten erfindungsgemäßen Verfahrens. Ein zweiter erfindungsgemäßer Client umfasst ein oder mehrere Mittel zur Ausführung der Schritte des dritten erfindungsgemäßen Verfahrens.

Zum Beispiel sind der erfindungsgemäße Server, der erste erfindungsgemäße Client und der zweite erfindungsgemäße Client voneinander verschiedene Datenverarbeitungsanlagen, die softwaremäßig und/oder hardwaremäßig eingerichtet sind, um die jeweiligen Schritte des jeweiligen erfindungsgemäßen Verfahrens ausführen zu können. Unter softwaremäßig und/oder hardwaremäßig eingerichtet soll zum Beispiel die Vorbereitung der jeweiligen Datenverarbeitungsanlage verstanden werden, die notwendig ist, um die Schritte eines jeweiligen Verfahrens beispielsweise in Form eines Computerprogramms ausführen zu können. Beispiele für eine Datenverarbeitungsanlage sind ein Computer, ein Desktop-Computer, ein tragbarer Computer wie ein Laptop-Computer, ein Tablet-Computer, ein persönlicher digitaler Assistent, ein Smartphone, ein Chipkartenterminal und/oder ein Thinclient.

Zum Beispiel umfassen der erfindungsgemäße Server, der erste erfindungsgemäße Client und/oder der zweite erfindungsgemäße Client jeweils Mittel zum Ausführen eines der erfindungsgemäßen Computerprogramme wie einen Prozessor. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfassen der erfindungsgemäße Server, der erste erfindungsgemäße Client und/oder der zweite erfindungsgemäße Client ferner jeweils Mittel zum Speichern von Daten und/oder Informationen wie einen Programmspeicher und/oder einen Hauptspeicher.

Zum Beispiel umfassen der erfindungsgemäße Server, der erste erfindungsgemäße Client und/oder der zweite erfindungsgemäße Client ferner jeweils Mittel zum Empfangen und/oder Senden von Daten und/oder Informationen über ein Netzwerk wie eine Netzwerkschnittstelle oder eine Netzwerkkarte. Zum Beispiel sind der erfindungsgemäße Server, der erste erfindungsgemäße Client und der zweite erfindungsgemäße Client über ein oder mehrere Netzwerke miteinander verbunden und/oder verbindbar.

Zum Beispiel umfasst der erfindungsgemäße Server zumindest einen Prozessor und zumindest einen Speicher mit Programmanweisungen, wobei der zumindest eine Speicher und die Programmanweisungen konfiguriert sind, um, zusammen mit dem zumindest einen Prozessor, den erfindungsgemäßen Server zu veranlassen, die Schritte des ersten erfindungsgemäßen Verfahrens auszuführen. Zum Beispiel umfasst der erste erfindungsgemäße Client zumindest einen Prozessor und zumindest einen Speicher mit Programmanweisungen, wobei der zumindest eine Speicher und die Programmanweisungen konfiguriert sind, um, zusammen mit dem zumindest einen Prozessor, den ersten erfindungsgemäßen Client zu veranlassen, die Schritte des zweiten erfindungsgemäßen Verfahrens auszuführen. Zum Beispiel umfasst der zweite erfindungsgemäße Client zumindest einen Prozessor und zumindest einen Speicher mit Programmanweisungen, wobei der zumindest eine Speicher und die Programmanweisungen konfiguriert sind, um, zusammen mit dem zumindest einen Prozessor, den zweiten erfindungsgemäßen Client zu veranlassen, die Schritte des dritten erfindungsgemäßen Verfahrens auszuführen.

Ein erfindungsgemäßes System zum Bereitstellen einer virtuellen Verbindung zum Übertragen von Anwendungsdateneinheiten umfasst (zumindest) einen erfindungsgemäßen Server, (zumindest) einen ersten erfindungsgemäßen Client und (zumindest) einen zweiten erfindungsgemäßen Client.

Die erfindungsgemäßen Computerprogramme umfassen Programmanweisungen, die eine Datenverarbeitungsanlage zur Ausführung zumindest eines der erfindungsgemäßen Verfahren veranlassen, wenn eines der erfindungsgemäßen Computerprogramme auf einem Prozessor der Datenverarbeitungsanlage ausgeführt wird. Ein Computerprogramm ist beispielsweise über ein Netzwerk verteilbar. Ein Computerprogramm kann zumindest teilweise Software und/oder Firmware eines Prozessors sein. Ein erfindungsgemäßes Computerprogramm kann sich beispielsweise auch aus mehreren Programmen und/oder Anwendungen zusammensetzen oder mit weiteren Programmen und/oder Anwendungen zusammenwirken, um eine Datenverarbeitungsanlage zur Ausführung eines erfindungsgemäßen Verfahrens zu veranlassen.

Das erfindungsgemäße Computerprogramm, das Programmanweisungen umfasst, die eine Datenverarbeitungsanlage zur Ausführung des ersten erfindungsgemäßen Verfahrens veranlassen, wenn das erfindungsgemäße Computerprogramm auf einem Prozessor der Datenverarbeitungsanlage ausgeführt wird, ist zum Beispiel als Server-Programm ausgebildet.

Das erfindungsgemäße Computerprogramm, das Programmanweisungen umfasst, die eine Datenverarbeitungsanlage zur Ausführung des zweiten erfindungsgemäßen Verfahrens veranlassen, wenn das erfindungsgemäße Computerprogramm auf einem Prozessor der Datenverarbeitungsanlage ausgeführt wird, ist zum Beispiel zumindest teilweise als Client-Programm ausgebildet. Zum Beispiel stellt das Client-Programm anderen Anwendungen, die von einem Prozessor der Datenverarbeitungsanlage ausgeführt werden, eine Schnittstelle zum Zugreifen auf eine Chipkarte über die von einem Server bereitgestellte Anwendungsdateneinheit-Vermittlung zur Verfügung. Zum Beispiel ist die Schnittstelle ein virtueller Gerätetreiber für eine Chipkartenzugriffseinheit (z.B. ein virtueller PC/SC Gerätetreiber) und/oder eine Programmierschnittstelle (API, Application Programming Interface). Zum Beispiel ist das Client-Programm Teil der Betriebsystemschicht der Datenverarbeitungsanlage, wenn es auf dem Prozessor der Datenverarbeitungsanlage ausgeführt wird, und stellt anderen Computerprogrammen der Anwendungsschicht der Datenverarbeitungsanlage eine Schnittstelle (z.B. eine Programmierschnittstelle) zum Zugreifen auf eine Chipkarte über die von einem Server bereitgestellte Anwendungsdateneinheit-Vermittlung zur Verfügung. Zum Beispiel nutzt eine Chipkartenanwendung, die von einem Prozessor der Datenverarbeitungsanlage ausgeführt wird, die Schnittstelle, um auf eine Chipkarte über die vom Server bereitgestellte Anwendungsdateneinheit-Vermittlung zuzugreifen. Dies ist beispielsweise vorteilhaft, da sich für die Chipkartenanwendung kein Unterschied zu dem Zugreifen auf eine unmittelbar mit der Datenverarbeitungsanlage verbundene Chipkarte ergibt. Somit können auch vorhandene Chipkartenanwendungen auf eine Chipkarte über die vom Server bereitgestellte Anwendungsdateneinheit-Vermittlung zugreifen.

Das erfindungsgemäße Computerprogramm, das Programmanweisungen umfasst, die eine Datenverarbeitungsanlage zur Ausführung des dritten erfindungsgemäßen Verfahrens veranlassen, wenn das erfindungsgemäße Computerprogramm auf einem Prozessor der Datenverarbeitungsanlage ausgeführt wird, ist zum Beispiel als Agenten-Programm ausgebildet. Zum Beispiel wirkt das Agenten-Programm mit einem Gerätetreiberprogramm für eine Chipkartenzugriffseinheit zusammen, um ein Zugreifen auf eine mit der Datenverarbeitungsanlage verbundene Chipkarte über die von dem Server bereitgestellte Anwendungsdateneinheit-Vermittlung zu ermöglichen. Zum Beispiel stellt das das Gerätetreiberprogramm für die Chipkartenzugriffseinheit anderen Computerprogrammen wie einer Chipkartenanwendung oder dem Agenten-Programm, die von einem Prozessor der Datenverarbeitungsanlage ausgeführt werden, eine Schnittstelle (z.B. eine Programmierschnittstelle) zum Zugreifen auf eine Chipkarte über eine Chipkartenzugriffseinheit bereit, wenn das Gerätetreiberprogramm für die Chipkartenzugriffseinheit auf einem Prozessor der Datenverarbeitungsanlage ausgeführt wird. Zum Beispiel ist das Gerätetreiberprogramm für die Chipkartenzugriffseinheit Teil der Betriebsystemschicht der Datenverarbeitungsanlage, wenn es auf dem Prozessor der Datenverarbeitungsanlage ausgeführt wird, und stellt anderen Computerprogrammen der Anwendungsschicht der Datenverarbeitungsanlage eine Schnittstelle (z.B. eine Programmierschnittstelle) zum Zugreifen auf eine Chipkarte über die Chipkartenzugriffseinheit mit Anwendungsdateneinheiten bereit.

Die erfindungsgemäßen Computerprogramme können jeweils in einem computerlesbaren Speichermedium gespeichert sein, welches eines oder mehrere erfindungsgemäße Computerprogramme enthält und z.B. als magnetisches, elektrisches, elektro-magnetisches, optisches und/oder andersartiges Speichermedium ausgebildet ist. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Durch das vierte erfindungsgemäße Verfahren wird somit eine virtuelle Verbindung bereitgestellt, über die zwischen den ersten Clients und den zweiten Clients (bzw. mit den zweiten Clients verbundenen Chipkarten) über die zumindest eine vom Server bereitgestellte Anwendungsdateneinheit-Vermittlung Anwendungsdateneinheiten besonders einfach und flexibel übertragen werden können.

Dies ist beispielsweise vorteilhaft, um einen Fernzugriff auf eine Chipkarte zu ermöglichen. Über die Anwendungsdateneinheit-Vermittlung (d.h. die virtuelle Verbindung) kann beispielsweise ein Client auf eine mit einem anderen Client verbundene Chipkarte zugreifen. Zum Beispiel kann eine Chipkartenanwendung, die von einem Prozessor eines ersten Clients ausgeführt wird, über die virtuelle Verbindung Anwendungsdateneinheiten mit einer unmittelbar mit einem zweiten Client verbundenen Chipkarte austauschen, um auf die Chipkarte zugreifen. Dabei kann aufgrund der Authentifizierung der Clients durch den Server sichergestellt werden, dass nur vertrauenswürdige Clients Anwendungsdateneinheiten über die virtuelle Verbindung übertragen können. Außerdem können Änderungen wie das Hinzufügen und Entfernen von Clients zum erfindungsgemäßen System besonders einfach und schnell vorgenommen werden, da bei solchen Änderungen nur die Anwendungsdateneinheit-Vermittlung des Servers (bzw. die Zuordnung) angepasst werden muss, jedoch keine Änderungen an den Clients notwendig sind.

Ferner ist dies beispielsweise vorteilhaft, um die Anzahl der durch die Clients zu sendenden Datenpakete zu verringern. Zum Beispiel kann ein erster Client eine Anwendungsdateneinheit an mehrere zweite Clients senden, ohne dass er für jeden der zweiten Clients ein Datenpaket mit der Anwendungsdateneinheit an den Server senden muss. Stattdessen reicht es aus, wenn die zweiten Clients dem ersten Client zugeordnet sind, dass der erste Client ein einziges Datenpaket mit einer Anwendungsdateneinheit an den Server sendet. Außerdem können auch zwischen Clients Anwendungsdateneinheiten übertragen werden, die die Adresse des jeweils anderen Clients gar nicht kennen.

Weiterhin ist dies beispielsweise vorteilhaft, um den Aufwand für die Verwaltung der Verbindungen zu den Clients zu verringern. Zum Beispiel müssen die Clients sich nur einmal gegenüber dem Server authentisieren bzw. durch den Server authentifiziert werden, und können trotzdem mit verschiedenen Clients Anwendungsdateneinheiten austauschen.

Im Folgenden werden beispielhafte Ausgestaltungen der vorliegenden Erfindung beschrieben, welche auf weitere beispielhafte Merkmale der erfindungsgemäßen Verfahren, der erfindungsgemäßen Computerprogramme, des erfindungsgemäßen Servers, des ersten erfindungsgemäße Clients, des zweiten erfindungsgemäßen Clients und des erfindungsgemäßen Systems abstellen. Insbesondere soll durch die Beschreibung eines zusätzlichen Verfahrensschritts eines der erfindungsgemäßen Verfahren auch das Folgende als offenbart gelten: Mittel zur Durchführung des Verfahrensschritts des erfindungsgemäßen Servers, des ersten erfindungsgemäßen Clients bzw. des zweiten erfindungsgemäßen Clients und eine entsprechende Programmanweisung des entsprechenden erfindungsgemäßen Computerprogramms, die eine Datenverarbeitungsanlage zur Ausführung des Verfahrensschritts veranlasst, wenn das Computerprogramm durch einen Prozessor der Datenverarbeitungsanlage ausgeführt wird. Das Gleiche soll auch für die Offenbarung eines Mittels zur Durchführung eines Verfahrensschritts oder einer Programmanweisung gelten, zum Beispiel soll die Offenbarung eines Mittels zur Durchführung eines Verfahrensschritts auch als Offenbarung des entsprechenden Verfahrensschritts und einer entsprechenden Programmanweisung verstanden werden.

In beispielhaften Ausgestaltungen der Erfindung umfasst das erste erfindungsgemäße Verfahren ferner das Empfangen eines Datenpakets mit einer Steuer-Anwendungsdateneinheit von einem der ersten Clients an dem Server, und das Senden eines Datenpakets mit der in dem empfangenen Datenpaket enthaltenen Steuer-Anwendungsdateneinheit von dem Server an zumindest einen der zweiten Clients. Zum Beispiel sendet der Server das Datenpakt zumindest teilweise abhängig von einer vorgegebenen Zuordnung zwischen den ersten und zweiten Clients an zumindest einen der zweiten Clients.

In beispielhaften Ausgestaltungen der Erfindung umfasst das erste erfindungsgemäße Verfahren ferner das Empfangen eines Datenpakets mit einer Antwort-Anwendungsdateneinheit von einem der zweiten Clients an dem Server, und das Senden eines Datenpakets mit der in dem empfangenen Datenpaket enthaltenen Antwort-Anwendungsdateneinheit von dem Server an zumindest einen der ersten Clients. Zum Beispiel sendet der Server das Datenpakt zumindest teilweise abhängig von einer vorgegebenen Zuordnung zwischen den ersten und zweiten Clients an zumindest einen der ersten Clients.

In beispielhaften Ausgestaltungen des ersten erfindungsgemäßen Verfahrens werden die ersten Clients und die zweiten Clients durch den Server für die zumindest eine Anwendungsdateneinheit-Vermittlung authentifiziert, und in beispielhaften Ausgestaltungen des zweiten erfindungsgemäßen Verfahrens authentisiert sich der erste Client für eine Anwendungsdateneinheit-Vermittlung zu einem oder mehreren zweiten Clients gegenüber dem Server, und in beispielhaften Ausgestaltungen des dritten erfindungsgemäßen Verfahrens authentisiert sich der zweite Client für eine Anwendungsdateneinheit-Vermittlung zu einem oder mehreren ersten Clients gegenüber dem Server.

Unter Authentisieren der ersten Clients für eine Anwendungsdateneinheit-Vermittlung zu einem oder mehreren zweiten Clients gegenüber dem Server soll beispielsweise verstanden werden, dass sich die ersten Clients jeweils beim Server für die Benutzung der zumindest einen Anwendungsdateneinheit-Vermittlung anmelden. Unter Authentisieren der zweiten Clients für eine Anwendungsdateneinheit-Vermittlung zu einem oder mehreren ersten Clients gegenüber dem Server soll beispielsweise verstanden werden, dass sich die zweiten Clients jeweils beim Server für die Benutzung der zumindest einen Anwendungsdateneinheit-Vermittlung anmelden. Zum Beispiel dürfen nur beim Server für die zumindest eine Anwendungsdateneinheit-Vermittlung angemeldete Clients die zumindest eine Anwendungsdateneinheit-Vermittlung benutzen. Zum Beispiel senden die ersten Clients und/oder die zweiten Clients Anmeldeinformationen für die zumindest eine Anwendungsdateneinheit-Vermittlung an den Server (z.B. über jeweilige Netzwerkverbindungen).

Unter Authentifizieren der ersten Clients und der zweiten Clients für die zumindest eine Anwendungsdateneinheit-Vermittlung durch den Server soll beispielsweise verstanden werden, dass der Server überprüft, ob die ersten Clients und die zweiten Clients für eine Anmeldung für die zumindest eine Anwendungsdateneinheit-Vermittlung autorisiert sind. Beispielsweise überprüft der Server, ob die ersten Clients und/oder die zweiten Clients jeweils für eine Nutzung der zumindest eine vom Server bereitgestellte Anwendungsdateneinheit-Vermittlung autorisiert sind. Zum Beispiel kann vorgesehen sein, dass für jede Benutzung einer vom Server bereitgestellten Anwendungsdateneinheit-Vermittlung eine gesonderte Anmeldung am Server notwendig ist. Es ist jedoch auch denkbar, dass lediglich eine Anmeldung erforderlich ist. Beispielsweise dürfen nur Clients, die durch den Server für die zumindest eine Anwendungsdateneinheit-Vermittlung authentifiziert und/oder für die zumindest eine Anwendungsdateneinheit-Vermittlung am Server angemeldet sind, die zumindest eine vom Server bereitgestellte Anwendungsdateneinheit-Vermittlung benutzen.

Beispielsweise stellt der Server die zumindest eine Anwendungsdateneinheit-Vermittlung derart bereit, dass, nur wenn ein Datenpaket mit einer Steuer-Anwendungsdateneinheit von einem für die zumindest eine Anwendungsdateneinheit-Vermittlung authentifizierten ersten Client an dem Server empfangen wird, der Server ein Datenpaket mit der in dem empfangenen Datenpaket enthaltenen Steuer-Anwendungsdateneinheit an zumindest einen der für diese Anwendungsdateneinheit-Vermittlung authentifizierten zweiten Clients zumindest teilweise abhängig von einer vorgegebenen Zuordnung zwischen den ersten Clients und den zweiten Clients sendet, und/oder dass, nur wenn ein Datenpaket mit einer Antwort-Anwendungsdateneinheit von einem für die zumindest eine Anwendungsdateneinheit-Vermittlung authentifizierten zweiten Client an dem Server empfangen wird, der Server ein Datenpaket mit der in dem empfangenen Datenpaket enthaltenen Antwort-Anwendungsdateneinheit an zumindest einen der für diese Anwendungsdateneinheit-Vermittlung authentifizierten ersten Clients zumindest teilweise abhängig von einer vorgegebenen Zuordnung zwischen den ersten Clients und den zweiten Clients sendet.

Diese Ausgestaltung ist beispielsweise vorteilhaft, um sicherzustellen, dass nur vertrauenswürdige Clients, die zumindest eine Anwendungsdateneinheit-Vermittlung nutzen und über die virtuelle Verbindung Anwendungsdateneinheiten austauschen können.

In beispielhaften Ausgestaltungen des ersten erfindungsgemäßen Verfahrens stellt der Server die zumindest eine Anwendungsdateneinheit-Vermittlung derart bereit, dass, wenn ein Datenpaket mit einer Steuer-Anwendungsdateneinheit von einem der ersten Clients an dem Server empfangen wird, der Server ein Datenpaket mit der in dem empfangenen Datenpaket enthaltenen Steuer-Anwendungsdateneinheit an zumindest einen der zweiten Clients gemäß einer Zuordnung zwischen den ersten Clients und den zweiten Clients und/oder einer Zuordnung der Steuer-Anwendungsdateneinheit zu dem zumindest einen der zweiten Clients sendet, und/oder dass, wenn ein Datenpaket mit einer Antwort-Anwendungsdateneinheit von einem der zweiten Clients an dem Server empfangen wird, der Server ein Datenpaket mit der in dem empfangenen Datenpaket enthaltenen Antwort-Anwendungsdateneinheit an zumindest einen der ersten Clients gemäß einer Zuordnung zwischen den ersten Clients und den zweiten Clients und/oder einer Zuordnung der Antwort-Anwendungsdateneinheit zu dem zumindest einen der ersten Clients sendet.

Wie oben beschrieben, ist die zumindest eine durch den Server bereitgestellte Anwendungsdateneinheit-Vermittlung beispielsweise derart eingerichtet, dass eine am Server empfangene Anwendungsdateneinheit (also eine in einem empfangenen Datenpaket enthaltene Anwendungsdateneinheit) gemäß einer Zuordnung (z.B. einem vorgegebenen Mapping) zwischen den ersten Clients und den zweiten Clients und/oder einer Zuordnung der Anwendungsdateneinheit zu zumindest einem der ersten und/oder zweiten Clients vermittelt werden kann. Durch eine solche Zuordnung kann beispielsweise bestimmt werden, welche Clients eine Anwendungsdateneinheit empfangen sollen und/oder an welche Clients der Server eine Anwendungsdateneinheit senden (z.B. weitersenden) soll.

Beispielsweise enthält eine am Server empfangenen Anwendungsdateneinheit und/oder ein am Server empfangenes Datenpaket, das die Anwendungsdateneinheit enthält, Zuordnungsinformationen, wobei die Zuordnungsinformationen zumindest teilweise eine Zuordnung zwischen den ersten Clients und den zweiten Clients und/oder eine Zuordnung der Anwendungsdateneinheit zu zumindest einem der ersten und/oder zweiten Clients vorgeben kann. Zum Beispiel enthalten die Zuordnungsinformationen einen eindeutigen Bezeichner (z.B. einen Benutzernamen) für jeden Client der die Anwendungsdateneinheit empfangen soll.

Zum Beispiel ist die Zuordnung alternativ oder zusätzlich zumindest teilweise durch in einer Datenbank gespeicherte Zuordnungsinformationen vorgegeben. Zum Beispiel sind die Zuordnungsinformationen in einem Speicher des Servers gespeichert. Zum Beispiel sind die Zuordnungsinformationen in einem Speicher außerhalb des Servers gespeichert, auf den der Server über eine Netzwerkverbindung zugreifen kann (z.B. in einem Speicher eines von dem Server verschiedenen Datenbankservers, der einen Verzeichnisdienst bereitstellt).

Zum Beispiel umfasst das erste erfindungsgemäße Verfahren ferner das Überprüfen, wenn ein Datenpaket mit einer Steuer-Anwendungsdateneinheit von einem der ersten Clients an dem Server empfangen wird, ob der erste Client für die Zuordnung (z.B. durch die Zuordnungsinformationen vorgegebene Zuordnung) autorisiert ist. Zum Beispiel sind die Zugriffskontrollmittel des Servers eingerichtet, zu überprüfen, wenn ein Datenpaket mit einer Steuer-Anwendungsdateneinheit von einem der ersten Clients an dem Server empfangen wird, ob der erste Client für die vorgegebene Zuordnung autorisiert ist. Zum Beispiel wird ein Datenpaket mit der in dem empfangenen Datenpaket enthaltenen Steuer-Anwendungsdateneinheit von dem Server nur dann an zumindest einen der zweiten Clients gemäß der vorgegebene Zuordnung gesendet, wenn der erste Client für die vorgegebene Zuordnung autorisiert ist.

Zum Beispiel sind die ersten Clients nicht für jede Zuordnung autorisiert. Beispielsweise enthält eine am Server empfangenen Anwendungsdateneinheit und/oder ein am Server empfangenes Datenpaket, das die Anwendungsdateneinheit enthält, Zuordnungsinformationen mit einem eindeutigen Bezeichner (z.B. einen Benutzernamen) für einen zweiten Client, der die Anwendungsdateneinheit empfangen soll, obwohl der erste Client für eine Zuordnung zu diesem zweiten Client nicht autorisiert ist. In diesem Fall sendet der Server beispielsweise kein Datenpaket mit der in dem empfangenen Datenpaket enthaltenen Steuer-Anwendungsdateneinheit an diesen zweiten Client.

Zum Beispiel umfasst das erste erfindungsgemäße Verfahren ferner das Überprüfen, wenn ein Datenpaket mit einer Antwort-Anwendungsdateneinheit von einem der zweiten Clients an dem Server empfangen wird, ob der zweite Client für die Zuordnung (z.B. durch die Zuordnungsinformationen vorgegebene Zuordnung) autorisiert ist. Zum Beispiel sind die Zugriffskontrollmittel des Servers eingerichtet, zu überprüfen, wenn ein Datenpaket mit einer Antwort-Anwendungsdateneinheit von einem der zweiten Clients an dem Server empfangen wird, ob der zweite Client für die vorgegebene Zuordnung autorisiert ist. Zum Beispiel wird ein Datenpaket mit der in dem empfangenen Datenpaket enthaltenen Antwort-Anwendungsdateneinheit von dem Server nur dann an zumindest einen der ersten Clients gemäß der vorgegebene Zuordnung gesendet, wenn der zweite Client für die vorgegebene Zuordnung autorisiert ist.

Zum Beispiel umfassen die Autorisierungsinformationen auch Informationen darüber, ob ein Client für eine Zuordnung autorisiert ist. Zum Beispiel ist die Autorisierung der Clients für eine Zuordnung zumindest teilweise abhängig von den jeweiligen Benutzern und/oder Betreibern der Clients und/oder den jeweils mit den zweiten Clients verbundenen Chipkarten. Die ersten Clients werden beispielsweise von Chipkarten-Anbietern wie z.B. einer Bank betrieben und dienen beispielsweise zur Verwaltung der vom Chipkarten-Anbieter ausgegebenen Chipkarten. Die zweiten Clients können beispielsweise (unmittelbar) mit Chipkarten verbunden werden wie z.B. ein Chipkartenterminal.

Die Autorisierung eines ersten Clients für eine Zuordnung kann sich zumindest teilweise beispielsweise durch den Betreiber des ersten Clients ergeben. Die Autorisierung eines zweiten Clients für eine Zuordnung kann sich zumindest teilweise beispielsweise durch die mit dem zweiten Client verbundene Chipkarte oder die Identität des Benutzers (z.B. des Besitzers der Chipkarte) des zweiten Clients ergeben. Durch verschiedene Zuordnungen und Autorisierungen dafür ist es somit beispielsweise möglich, dass eine Vielzahl von Chipkarten-Anbietern (z.B. Banken und Versicherungen usw.) die vom Server bereitgestellte Anwendungsdateneinheit-Vermittlung zum Übertragen von Anwendungsdateneinheiten zu und von einer bestimmten Chipkarte (z.B. einem elektronischen Personalausweis oder einer kombinierten Bank- und Versicherungskarte eines bestimmten Benutzers) verwenden, oder dass ein Chipkarten-Anbietern (z.B. eine Bank) die vom Server bereitgestellte Anwendungsdateneinheit-Vermittlung zum Übertragen von Anwendungsdateneinheiten zu und von einer Vielzahl von Chipkarten (z.B. allen von der Bank ausgegebenen Bankkarten) verwenden.

Diese Ausgestaltung ist beispielsweise vorteilhaft, um sicherzustellen, dass nur bestimmte Clients, die die zumindest eine Anwendungsdateneinheit-Vermittlung nutzen, auch Anwendungsdateneinheiten über die virtuelle Verbindung austauschen können. Zum Beispiel kann nur ein erster Client, der von einem bestimmten Chipkarten-Anbieter wie z.B. einer Bank betrieben wird, für Zuordnungen zu zweiten Clients, die mit von dem Chipkarten-Anbieter ausgegebenen Chipkarten verbunden sind, autorisiert sein, so dass der Server nur Steuer-Anwendungsdateneinheiten, die er von diesem ersten Client empfängt, an diese zweite Clients vermittelt (z.B. sendet) und Antwort-Anwendungsdateneinheiten, die er von diesen zweiten Clients empfängt, nur an diesen ersten Client vermittelt (z.B. sendet).

In beispielhaften Ausgestaltungen der Erfindung umfassen die erfindungsgemäßen Verfahren ferner das Zugreifen auf eine Chipkarte über die zumindest eine vom Server bereitgestellte Anwendungsdateneinheit-Vermittlung. Zum Beispiel umfassen die erfindungsgemäßen Verfahren ferner das Zugreifen von zumindest einem der ersten Clients auf zumindest eine mit einem der zweiten Clients verbundene Chipkarte über die Anwendungsdateneinheit-Vermittlung.

Dies ist beispielsweise vorteilhaft, um einen Fernzugriff auf eine Chipkarte bzw. eine Fernsteuerung einer Chipkarte zu ermöglichen. Dadurch kann vermieden werden, dass Informationen, die für ein Zugreifen auf oder eine Steuerung der Chipkarte notwendig sind wie Chipkarten-Verwaltungsschlüssel, Chipkarten-Authentisierungsinformationen (z.B. Passwörter oder PINs), Schlüssel zum Verschlüsseln von Informationen für die Chipkarten und/oder zum Entschlüsseln von Informationen von der Chipkarte und/oder Schlüsselzertifikate, auf einem lokalen Client (z.B. einem zweiten Client) gespeichert werden müssen, der unmittelbar mit einer Chipkarte verbunden werden kann. Ein solche lokaler Client (z.B. ein zweiter Client) wird typischerweise von einer Vielzahl von Benutzern verwendet und ist deshalb besonders anfällig für Manipulationen. Stattdessen können diese sensiblen Informationen auf einem entfernten Client (z.B. einem ersten Client) gespeichert und dort besonders geschützt werden.

Unter Zugreifen auf eine Chipkarte soll beispielsweise verstanden werden, dass Informationen mit der Chipkarte ausgetauscht werden. Zum Beispiel greift ein Client auf eine Chipkarte zu, wenn er eine Steuer-Anwendungsdateneinheit an die Chipkarte sendet und/oder eine Antwort-Anwendungsdateneinheit von der Chipkarte empfängt. Ein Client sendet beispielsweise eine Steuer-Anwendungsdateneinheit an eine Chipkarte, wenn eine Chipkartenanwendung, die von einem Prozessor des Clients ausgeführt wird, eine Steuer-Anwendungsdateneinheit für die Chipkarte erzeugt und veranlasst, dass die Steuer-Anwendungsdateneinheit an die Chipkarte gesendet wird. Ein Client empfängt beispielsweise eine Steuer-Anwendungsdateneinheit an eine Chipkarte, wenn eine Chipkartenanwendung, die von einem Prozessor des Clients ausgeführt wird, eine Antwort-Anwendungsdateneinheit von der Chipkarte erhält.

Zum Beispiel enthält die Steuer-Anwendungsdateneinheit eine Anweisung für eine Chipkarte und/oder die Antwort-Anwendungsdateneinheit enthält eine Antwort von einer Chipkarte auf eine Anweisung. Zum Beispiel enthält die Steuer-Anwendungsdateneinheit eine Anweisung für eine mit zumindest einem zweiten Client verbundene Chipkarte. Zum Beispiel enthält die Antwort-Anwendungsdateneinheit die Antwort von der mit zumindest einem zweiten Client verbundenen Chipkarte auf die Anweisung.

In beispielhaften Ausgestaltungen des dritten erfindungsgemäßen Verfahrens umfasst das Verfahren ferner das Verbinden des zweiten Clients mit einer Chipkarte oder das Emulieren einer Verbindung mit einer Chipkarte, und in beispielhaften Ausgestaltungen des ersten und zweiten erfindungsgemäßen Verfahrens sind die zweiten Clients mit einer Chipkarte verbunden oder emulieren eine Verbindung mit einer Chipkarte.

Eine Chipkarte ist beispielsweise eine spezielle Plastikkarte mit einem integrierten Schaltkreis (z.B. einem Chip), der zumindest eine Logikeinheit, eine Speichereinheit und/oder eine Prozessoreinheit umfasst. Als eine Chipkarte soll beispielsweise eine Smartcard oder eine Integrated Circuit Card (ICC) verstanden werden. Insbesondere soll unter einer Chipkarte eine Chipkarte gemäß dem ISO 7816 und/oder dem ISO 14443 Standard und/oder dem ISO 15693 Standard verstanden werden.

Unter Verbinden eines zweiten Clients mit einer Chipkarte soll beispielsweise verstanden werden, dass der zweite Client mit einer Chipkarte verbunden wird. Vorzugsweise soll darunter das Herstellen einer logischen Verbindung von dem zweiten Client zu der Chipkarte verstanden werden, über die Informationen und/oder Daten (z.B. in Form von Anwendungsdateneinheiten) gesendet und empfangen werden können. Eine logische Verbindung wird zum Beispiel durch das Aushandeln von Kommunikationsparametern und/oder das Senden und Empfangen von Informationen und/oder Daten hergestellt. Zum Beispiel kann sich der zweite Client mit einer Chipkarte verbinden, indem er Kommunikationsparameter mit der Chipkarte aushandelt und/oder auf die Chipkarte zugreift. Zum Beispiel ist der zweite Client mit einer Chipkarte verbunden, wenn sich die Chipkarte in einer Chipkartenzugriffseinheit des zweiten Clients befindet und/oder wenn der zweite Client über eine Chipkartenzugriffseinheit des zweiten Clients auf die Chipkarte zugreifen kann. Die Verbindung zwischen dem zweiten Client und der Chipkarte kann drahtgebunden und/oder drahtlos sein. Ein Beispiel für eine drahtlose Verbindung ist eine kontaktlose Verbindung wie eine Funkverbindung, eine induktive Verbindung, eine Nahfeldkommunikations-Verbindung (Near Field Communication, NFC), eine Bluetooth-Verbindung und/oder eine RFID-Verbindung (Radio Frequency Identifcation). Der ISO 14443 Standard und der ISO 15693 Standard betreffen kontaktlose Chipkarten. Zum Beispiel ist die Verbindung zwischen dem zweiten Client und der Chipkarte eine kontaktlose Verbindung gemäß dem ISO 14443 Standard und/oder dem ISO 15693 Standard. Ein Beispiel für eine drahtgebundene Verbindung ist eine kontaktbehaftete Verbindung wie eine Verbindung zwischen auf der Chipkarte angeordneten Kontakten und entsprechenden Kontakten einer Chipkartenzugriffseinheit. Der ISO 7816 Standard betrifft kontaktbehaftete Chipkarten. Zum Beispiel ist die Verbindung zwischen dem zweiten Client und der Chipkarte eine kontaktbehaftete Verbindung gemäß dem ISO 7816 Standard.

Vorzugsweise werden die zweiten Client jeweils unmittelbar mit der Chipkarte verbunden. Eine unmittelbare Verbindung zwischen einem Client und einer Chipkarte besteht beispielsweise, wenn keine weitere Datenverarbeitungsanlage zwischen dem Client und der Chipkarte angeordnet ist. Zum Beispiel besteht eine unmittelbare Verbindung zwischen einem Client und einer Chipkarte, wenn der Client über eine unmittelbar mit dem Client verbundene Chipkartenzugriffseinheit auf die Chipkarte zugreifen kann.

Zum Beispiel sind die zweiten Clients eingerichtet, um jeweils mit einer Chipkarte verbunden zu werden. Insbesondere können die zweiten Clients softwaremäßig und/oder hardwaremäßig eingerichtet sein, um mit einer Chipkarte verbunden zu werden.

Zum Beispiel umfassen die zweiten Clients jeweils eine Chipkartenzugriffseinheit (z.B. ein Chipkartenzugriffsgerät, ein Chipkartenlesegerät und/oder ein Chipkartenschreibgerät). Beispielsweise umfassen die zweiten Clients jeweils eine Chipkartenzugriffseinheit gemäß dem ISO 7816 Standard und/oder dem ISO 14443 Standard und/oder dem ISO 15693 Standard. Zum Beispiel können die zweiten Client zumindest teilweise Chipkartenterminals sein wie Authentifizierungsterminals oder Bezahlterminals, beispielsweise Bezahlterminals für die Bezahlung mit Bankkarten und/oder Kreditkarten. Ein Client ist beispielsweise unmittelbar mit einer Chipkartenzugriffseinheit über eine interne Busverbindung, eine lokale drahtgebundene Verbindung wie eine USB-Verbindung (Universal Serial Bus, z.B. USB 1.1 oder USB 2.0 oder USB 3.0), eine serielle Verbindung wie eine RS 232-Verbindung, eine IEEE 1394-Verbindung und/oder eine lokale drahtlose Verbindung wie eine Bluetooth-Verbindung verbunden.

Zum Beispiel umfasst jeder der zweiten Clients ein Gerätetreiberprogramm für die Chipkartenzugriffseinheit. Das Gerätetreiberprogramm kann in einem Speicher des jeweiligen zweiten Clients gespeichert sein. Beispielsweise umfasst das Gerätetreiberprogramm für die Chipkartenzugriffseinheit Programmanweisungen zur Steuerung einer Kommunikation mit einer Chipkarte über die Chipkartenzugriffseinheit. Zum Beispiel stellt das Gerätetreiberprogramm für die Chipkartenzugriffseinheit anderen Computerprogrammen wie einer Chipkartenanwendung oder einem Agenten-Programm, die von einem Prozessor eines jeweiligen zweiten Clients ausgeführt werden, eine Schnittstelle (z.B. eine Programmierschnittstelle) zum Zugreifen auf eine Chipkarte über die Chipkartenzugriffseinheit bereit, wenn das Gerätetreiberprogramm für die Chipkartenzugriffseinheit auf einem Prozessor des zweiten Clients ausgeführt wird. Zum Beispiel ist das Gerätetreiberprogramm für die Chipkartenzugriffseinheit Teil der Betriebsystemschicht des zweiten Clients, wenn es auf dem Prozessor des zweiten Clients ausgeführt wird, und stellt anderen Computerprogrammen der Anwendungsschicht des zweiten Clients eine Schnittstelle (z.B. eine Programmierschnittstelle) zum Zugreifen auf eine Chipkarte über die Chipkartenzugriffseinheit mit Anwendungsdateneinheiten bereit. Zum Beispiel ist eine Anwendungsdateneinheit eine Dateneinheit der Anwendungsschicht.

Unter Emulieren einer Verbindung mit einer Chipkarte soll beispielsweise verstanden werden, dass die zweiten Clients eine Verbindung mit einer Chipkarte softwaremäßig nachbilden ohne tatsächlich mit einer Chipkarte verbunden zu sein. Zum Beispiel sind die zweiten Clients eingerichtet, um eine Verbindung mit einer Chipkarte zu emulieren. Insbesondere können die zweiten Clients softwaremäßig eingerichtet sein, um eine Verbindung mit einer Chipkarte zu emulieren.

Zum Beispiel umfasst das dritte erfindungsgemäße Verfahren ferner das Senden der in dem am zweiten Client empfangenen Datenpaket enthaltenen Steuer-Anwendungsdateneinheit von dem zweiten Client an die mit dem zweiten Client verbundene Chipkarte, und/oder das Empfangen der Antwort-Anwendungsdateneinheit von der mit dem zweiten Client verbundene Chipkarte an dem zweiten Client. Dies ist beispielsweise vorteilhaft, um es ersten Clients zu ermöglichen, über die vom Server bereitgestellte Anwendungsdateneinheit-Vermittlung und einen zweiten Client auf eine mit dem zweiten Client verbundene Chipkarte zuzugreifen.

Dies ist beispielsweise vorteilhaft, um eine Weiterleitung von Anwendungsdateneinheiten durch den zweiten Client zu ermöglichen. Zum Beispiel sind die zweiten Clients eingerichtet, um Anwendungsdateneinheiten entsprechend weiterzuleiten.

Zum Beispiel umfassen die zweiten Clients jeweils Computerprogramme (z.B. jeweils Agenten-Programme) mit Programmanweisungen, die den jeweiligen zweiten Client veranlassen, eine in einem am zweiten Client empfangenen Datenpaket enthaltenen Steuer-Anwendungsdateneinheit von dem zweiten Client an eine mit dem zweiten Client verbundene Chipkarte zu senden und/oder eine von der mit dem zweiten Client verbundene Chipkarte an dem zweiten Client empfangene Antwort-Anwendungsdateneinheit in einem Datenpaket an den Server zu senden, wenn das Computerprogramm auf einem Prozessor des zweiten Clients ausgeführt wird. Zum Beispiel sind solche Computerprogramme jeweils in einem Speicher der zweiten Clients gespeichert und werden jeweils von einem Prozessor der zweiten Clients ausgeführt, um eine Weiterleitung von Anwendungsdateneinheiten durch den jeweiligen zweiten Client zu ermöglichen.

Zum Beispiel umfasst das zweite erfindungsgemäße Verfahren das Erzeugen einer Steuer-Anwendungsdateneinheit für zumindest eine mit einem der zweiten Clients verbundene Chipkarte.

Zum Beispiel sind die ersten Clients eingerichtet, um Steuer-Anwendungsdateneinheiten für zumindest eine mit einem der zweiten Clients verbundene Chipkarte zu erzeugen.

Zum Beispiel umfassen die ersten Clients jeweils Chipkartenanwendungen mit Programmanweisungen, die einen ersten Client veranlassen, eine Steuer-Anwendungsdateneinheiten mit Anweisungen für eine Chipkarte zu erzeugen und/oder Antwort-Anwendungsdateneinheiten von einer Chipkarte zu erhalten und zu interpretieren und/oder weiterzuverarbeiten, wenn die Chipkartenanwendung von einem Prozessor des ersten Clients ausgeführt wird. Zum Beispiel sind solche Chipkartenanwendungen jeweils in einem Speicher der ersten Clients gespeichert und werden jeweils von einem Prozessor der ersten Clients ausgeführt.

Zum Beispiel umfassen die ersten Clients jeweils Computerprogramme (z.B. Client-Programme) mit Programmanweisungen, die einen ersten Client veranlassen, eine von einer Chipkartenanwendung erzeugte Steuer-Anwendungsdateneinheiten mit Anweisungen für eine Chipkarte in einem Datenpaket an den Server zu senden und/oder eine in einem Datenpaket enthaltene Antwort-Anwendungsdateneinheiten zu empfangen und die darin enthaltenen Anwendungsdateneinheit an die Chipkartenanwendung weiterzuleiten oder der Chipkartenanwendung zur Weiterverarbeitung bereitzustellen.

In beispielhaften Ausgestaltungen der Erfindung ist die Steuer-Anwendungsdateneinheit eine Command Application Protocol Data Unit (Command-APDU) und die Antwort-Anwendungsdateneinheit eine Response Application Protocol Data Unit (Response-APDU). Unter einer APDU soll insbesondere eine Dateneinheit nach dem ISO 7816-4 Standard verstanden werden. Eine APDU dient beispielsweise zum Zugreifen von einer Chipkartenanwendung, die von einem Prozessor einer Datenverarbeitungsanlage ausgeführt wird, auf eine Chipkarte.

In beispielhaften Ausgestaltungen der Erfindung erfolgen das Empfangen und das Senden der Datenpakete über zumindest ein Netzwerk. Zum Beispiel werden die Datenpakete über ein oder mehrere Netzwerke übertragen. Die Übertragung der Datenpakete kann sowohl verbindungslos als auch verbindungsorientiert erfolgen. Beispiele für ein Netzwerk sind, wie oben beschrieben, ein lokales Netzwerk (LAN) wie ein Ethernet-Netzwerk oder ein IEEE 802-Netzwerk, ein Weitverkehrsnetzwerk (WAN), ein globales Netzwerk (global area network, GAN), ein drahtloses Netzwerk, ein drahtgebundenes Netzwerk, ein Mobilfunknetzwerk, ein Telefonnetzwerk und/oder das Internet. Zum Beispiel ist der Server zumindest teilweise über das Internet mit den ersten Clients und den zweiten Clients verbunden.

Zum Beispiel erfolgt die Übertragung der Datenpakete in dem zumindest einem Netzwerk gemäß einem paketvermittelten Übertragungsprotokoll wie TCP (Transmission Control Protocol) oder UDP (User Datagram Protocol). Beispielsweise sind die Steuer-Anwendungsdateneinheit und/oder die Antwort-Anwendungsdateneinheit in den Datenpaketen jeweils als Nutzdaten enthalten.

Zum Beispiel erfolgt die Übertragung der Datenpakete in dem zumindest einem Netzwerk verschlüsselt. Zum Beispiel werden die Datenpakete gemäß einem der folgenden Verschlüsselungsprotokolle übertragen: TLS (Transport Layer Security, SSL (Secure Sockets Layer)und/oder Secure Messaging Protocol. Dies ist beispielsweise vorteilhaft, um die in den Datenpaketen enthaltenen Informationen zu schützen.

In beispielhaften Ausgestaltungen des ersten erfindungsgemäßen Verfahrens umfasst das Verfahren ferner das Empfangen einer Zustandsinformationen von einem der zweiten Clients an dem Server, und das Senden der Zustandsinformationen von dem Server an zumindest einen der ersten Clients, und in beispielhaften Ausgestaltungen des zweiten erfindungsgemäßen Verfahrens umfasst das Verfahren ferner das Empfangen der Zustandsinformationen an dem ersten Client von dem Server, und in beispielhaften Ausgestaltungen des dritten erfindungsgemäßen Verfahrens umfasst das Verfahren ferner das Erzeugen der Zustandsinformationen durch den zweiten Client und das Senden der Zustandsinformationen von dem zweiten Client an den Server.

Zum Beispiel ist die zumindest eine durch den Server bereitgestellte Anwendungsdateneinheit-Vermittlung derart eingerichtet, dass, wenn ein Datenpaket mit einer Zustandsinformation von einem der zweiten Clients am Server empfangen wird, der Server ein Datenpaket mit der in dem empfangenen Datenpaket enthaltenen Zustandsinformationen an zumindest einen der ersten Clients sendet. Zum Beispiel melden sich die ersten Clients für den Empfang der Zustandsinformationen von einem oder mehreren der zweiten Clients an. Zum Beispiel enthalten die Anmeldeinformationen und/oder die Autorisierungsinformationen entsprechende Informationen. Beispielsweise sendet der Server an alle für den Empfang von Zustandsinformationen eines zweiten Clients angemeldete erste Clients, die von dem zweiten Client empfangenen Zustandsinformationen.

Zum Beispiel zeigen die Zustandsinformationen an, ob ein zweiter Client mit einer Chipkarte verbunden ist oder nicht. Zum Beispiel erzeugen die zweiten Clients jedes Mal entsprechende Zustandsinformationen, wenn sie mit einer Chipkarte verbunden werden und/oder wenn sie von einer Chipkarte getrennt werden. Zum Beispiel sind die Zustandsinformationen in einem oder mehreren Datenpaketen enthalten, die von dem zweiten Client an den Server und von dem Server an den zumindest einen ersten Client (z.B. über jeweilige Netzwerkverbindungen) gesendet werden. Zum Beispiel werden die Zustandsinformationen von dem zweiten Client an den Server und/oder von dem Server an den zumindest einen ersten Client als Push-Benachrichtigung gesendet.

Diese Ausgestaltung ist beispielsweise vorteilhaft, um einen Benachrichtigungsrückkanal bereitzustellen, über den die ersten Clients über Zustandsänderungen der zweiten Clients informiert werden können.

Die zuvor in dieser Anmeldung beschriebenen beispielhaften Ausgestaltungen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen
- Fig. 1:: ein Blockdiagramm einer beispielhaften Ausführungsform einer Datenverarbeitungsanlage;
- Fig. 2:: ein Blockdiagramm einer beispielhaften Ausführungsform des erfindungsgemäßen Systems;
- Fig. 3:: ein Ablaufdiagramm mit Schritten einer beispielhaften Ausführungsform des erfindungsgemäßen ersten Verfahrens;
- Fig. 4:: ein Ablaufdiagramm mit Schritten einer beispielhaften Ausführungsform des zweiten erfindungsgemäßen Verfahrens;
- Fig. 5:: ein Ablaufdiagramm mit Schritten einer beispielhaften Ausführungsform des dritten erfindungsgemäßen Verfahrens;
- Fig. 6:: ein Blockdiagramm einer beispielhaften Software-Architektur des erfindungsgemäßen Systems.

### Detaillierte Beschreibung einiger beispielhafter Ausführungsformen der vorliegenden Erfindung

Die vorliegende Erfindung wird im Folgenden anhand von beispielhaften Ausführungsformen beschrieben.

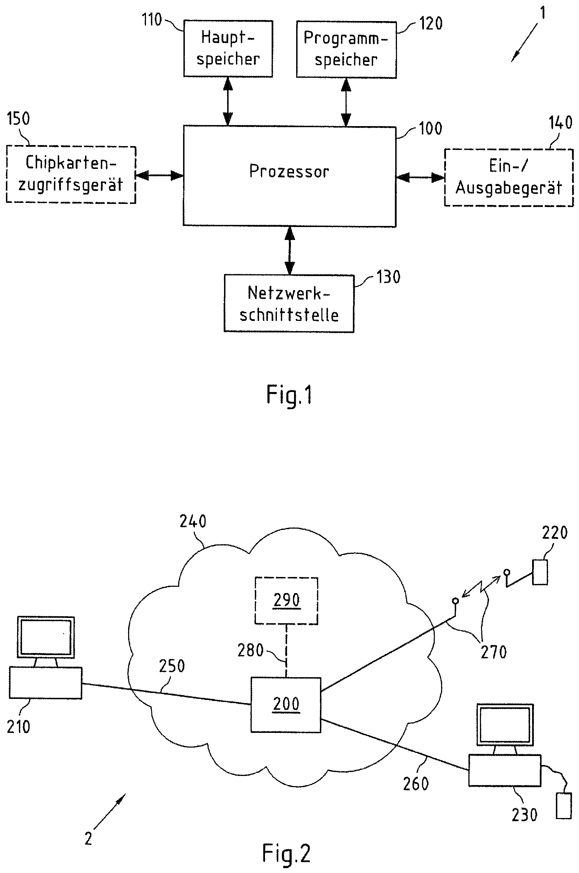

Fig. 1 zeigt ein Blockdiagramm einer beispielhaften Ausführungsform einer Datenverarbeitungsanlage 1. Datenverarbeitungsanlage 1 zeigt eine beispielhafte Ausführungsform eines erfindungsgemäßen Servers, eines ersten erfindungsgemäßen Clients und/oder eines zweiten erfindungsgemäßen Clients.

Datenverarbeitungsanlage 1 kann beispielsweise ein Computer, ein Desktop-Computer, ein tragbarer Computer wie ein Laptop-Computer, ein Tablet-Computer, ein persönlicher digitaler Assistent, ein Smartphone, ein Thinclient und/oder ein Chipkartenterminal sein.

Prozessor 100 der Datenverarbeitungsanlage 1 ist insbesondere als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildet.

Prozessor 100 führt Programmanweisungen aus, die in Programmspeicher 120 gespeichert sind, und speichert beispielsweise Zwischenergebnisse oder ähnliches in Hauptspeicher 110. Zum Beispiel ist Programmspeicher 120 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 110 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 120 ist vorzugsweise ein lokaler mit der Datenverarbeitungsanlage 1 fest verbundener Datenträger. Mit der Datenverarbeitungsanlage 1 fest verbundene Datenträger sind beispielsweise Festplatten, die in die Datenverarbeitungsanlage 1 eingebaut sind. Alternativ kann der Datenträger beispielsweise auch ein mit der Datenverarbeitungsanlage 1 trennbar verbindbarer Datenträger sein wie ein Speicher-Stick, ein Wechseldatenträger, eine tragbare Festplatte, eine CD, eine DVD und/oder eine Diskette.

Programmspeicher 120 enthält das Betriebssystem von Datenverarbeitungsanlage 1, das beim Starten der Datenverarbeitungsanlage 1 zumindest teilweise in Hauptspeicher 110 geladen und vom Prozessor 100 ausgeführt wird. Insbesondere wird beim Starten von Datenverarbeitungsanlage 1 zumindest ein Teil des Kerns des Betriebsystems in den Hauptspeicher 110 geladen und von Prozessor 100 ausgeführt. Das Betriebssystem von Datenverarbeitungsanlage 1 ist vorzugsweise ein Windows-, UNIX-, Linux-, Android-, Apple iOS- und/oder MAC-Betriebsystem.

Erst das Betriebssystem ermöglicht die Verwendung von Datenverarbeitungsanlage 1 zur Datenverarbeitung. Es verwaltet beispielsweise Betriebsmittel wie Hauptspeicher 110 und Programmspeicher 120, Netzwerkschnittstelle 130, Ein- und Ausgabegerät 140 und Chipkartenzugriffsgerät 150, stellt unter anderem durch Programmierschnittstellen anderen Programmen grundlegende Funktionen zur Verfügung und steuert die Ausführung von Programmen.

Prozessor 100 steuert die Netzwerkschnittstelle 130, wobei die Steuerung der Netzwerkschnittstelle 130 beispielsweise durch ein Gerätereiberprogramm ermöglicht wird, das Teil des Kerns des Betriebssystems ist. Netzwerkschnittstelle 130 ist beispielsweise eine Netzwerkkarte, ein Netzwerkmodul und/oder ein Modem und ist eingerichtet, um eine Verbindung der Datenverarbeitungsanlage 1 mit einem Netzwerk herzustellen. Netzwerkschnittstelle 130 kann beispielsweise Daten über das Netzwerk empfangen und an Prozessor 100 weiterleiten und/oder Daten von Prozessor 100 empfangen und über das Netzwerk senden. Beispiele für ein Netzwerk sind ein lokales Netzwerk (LAN) wie ein Ethernet-Netzwerk oder ein IEEE 802-Netzwerk, ein Weitverkehrsnetzwerk (WAN), ein globales Netzwerk (global area network, GAN), ein drahtloses Netzwerk, ein drahtgebundenes Netzwerk, ein Mobilfunknetzwerk, ein Telefonnetzwerk und/oder das Internet.

Des Weiteren kann Prozessor 100 zumindest ein optional vorhandenes Ein-/Ausgabegerät 140 steuern, wobei die Steuerung des optional vorhandenen Ein-/Ausgabegerät 140 beispielsweise durch ein Gerätereiberprogramm ermöglicht wird, das Teil des Kerns des Betriebssystems ist. Ein-/Ausgabegerät 140 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 140 kann beispielsweise Eingaben eines Benutzers aufnehmen und an Prozessor 100 weiterleiten und/oder Informationen für den Benutzer von Prozessor 100 empfangen und ausgeben.

Des Weiteren kann Prozessor 100 zumindest ein optional vorhandenes Chipkartenzugriffsgerät 150 steuern, wobei die Steuerung des optional vorhandenen Chipkartenzugriffsgerät 150 beispielsweise durch ein Gerätereiberprogramm ermöglicht wird, das Teil des Kerns des Betriebssystems ist. Chipkartenzugriffsgerät 150 ist beispielsweise ein Gerät zum kontaktlosen oder kontaktbehafteten Verbinden mit einer Chipkarte. Zum Beispiel ist Chipkartenzugriffsgerät 150 ein Chipkartenzugriffsgerät gemäß dem ISO 7816 Standard und/oder dem ISO 14443 Standard und/oder dem ISO 15693 Standard. Zum Beispiel umfasst ein zweiter erfindungsgemäßer Client Chipkartenzugriffsgerät 150. Chipkartenzugriffsgerät 150 kann in Datenverarbeitungsanlage 1 integriert sein (z.B. wenn Datenverarbeitungsanlage 1 ein Chipkartenterminal ist) oder über eine externe Datenschnittstelle mit Datenverarbeitungsanlage 1 verbunden sein. Datenverarbeitungsanlage 1 ist unmittelbar mit Chipkartenzugriffsgerät 150 verbunden, zum Beispiel über eine drahtgebundene Verbindung, eine drahtlose Verbindung, ein USB-Verbindung (Universal Serial Bus, z.B. USB 1.1 oder USB 2.0 oder USB 3.0), eine serielle Verbindung wie eine RS 232-Verbindung, eine IEEE 1394-Verbindung und/oder eine Bluetooth Verbindung.

Fig. 2 zeigt ein Blockdiagramm einer beispielhaften Ausführungsform des erfindungsgemäßen Systems 2. System 2 umfasst einen Server 200, einen Client 210 und ein Chipkartenterminal 220 mit einem integrierten Chipkartenzugriffsgerät und einen Computer 230 mit einem externen Chipkartenzugriffsgerät. Server 200, Client 210, Chipkartenterminal 220 und Computer 230 entsprechen Datenverarbeitungsanlage 1 (vgl. Fig. 1). System 200 kann optional einen Verzeichnisdienst-Server 290 umfassen.

Server 200 ist ein Beispiel für einen erfindungsgemäßen Server. Server 200 ist zum Beispiel ein Server im Internet 240, der über seine Netzwerkschnittstelle mit dem Internet verbunden ist und einen Anwendungsdateneinheit-Vermittlungsdienst anbietet. Zum Beispiel ist auf Server 200 ein Computerprogramm wie ein Server-Programm installiert, das Programmanweisungen umfasst, die Server 200 zur Ausführung des ersten erfindungsgemäßen Verfahrens veranlassen, wenn das Computerprogramm auf dem Prozessor des Server 200 ausgeführt wird. Das Computerprogramm kann im Programmspeicher des Servers 200 gespeichert sein. Server 200 ist beispielsweise ein Server eines Anwendungsdateneinheit-Vermittlungsdiensteanbieters.

Client 210 ist ein Beispiel für einen ersten erfindungsgemäßen Client. Zum Beispiel ist auf Client 210 ein Computerprogramm installiert, das Programmanweisungen umfasst, die Client 210 zur Ausführung des zweiten erfindungsgemäßen Verfahrens veranlassen, wenn das Computerprogramm auf dem Prozessor des Clients 210 ausgeführt wird. Zum Beispiel umfasst dieses Computerprogramm zumindest eine Chipkartenanwendung und ein Client-Programm. Client 210 ist über Netzwerkverbindung 250 mit Server 200 verbunden. Netzwerkverbindung 250 ist zumindest teilweise eine Verbindung über das Internet 240. Client 210 wird beispielsweise von einem Chipkarten-Anbieter zur Verwaltung der von dem Chipkarten-Anbieter ausgegebenen Chipkarten betrieben.

Chipkartenterminal 220 und Computer 230 sind Beispiele für zweite erfindungsgemäße Clients. Zum Beispiel ist auf Chipkartenterminal 220 und Computer 230 ein Computerprogramm installiert, das Programmanweisungen umfasst, die Chipkartenterminal 220 und Computer 230 zur Ausführung des dritten erfindungsgemäßen Verfahrens veranlassen, wenn das Computerprogramm auf dem Prozessor des Chipkartenterminals 220 und des Computers 230 ausgeführt wird. Zum Beispiel umfasst dieses Computerprogramm zumindest ein Gerätetreiberprogramm für die Chipkartenzugriffseinheit und ein Agenten-Programm. Computer 220 ist über Netzwerkverbindung 260 mit Server 200 verbunden. Netzwerkverbindung 260 ist zumindest teilweise eine Verbindung über das Internet 240. Chipkartenterminal 230 ist über Netzwerkverbindung 270 mit Server 200 verbunden. Netzwerkverbindung 270 ist zumindest teilweise eine Verbindung über das Internet 240 und teileweise eine Verbindung über ein Mobilfunknetz.

Verzeichnisdienst-Server 290 stellt beispielsweise einen Verzeichnisdienst zur Verwaltung von Benutzerinformationen wie Autorisierungs- und/oder Anmeldeinformationen für die Benutzung der Anwendungsdateneinheit-Vermittlung des Servers 200 bereit. Verzeichnisdienst-Server 290 ist mit Server 200 über Netzwerkverbindung 280 verbunden. Netzwerkverbindung 280 ist zumindest teilweise eine Verbindung über das Internet 240.

Netzwerkverbindungen 250, 260, 270 und 280 sind beispielsweise verbindungsorientierte Netzwerkverbindungen. Zum Beispiel erfolgt die Datenübertragung über Netzwerkverbindungen 250, 260, 270 und 280 gemäß einem paketvermittelten Übertragungsprotokoll wie TCP (Transmission Control Protocol) oder UDP (User Datagram Protocol). Zum Beispiel erfolgt die Datenübertragung über Netzwerkverbindungen 250, 260, 270 und 280 gemäß einem Verschlüsselungsprotokoll wie TLS (Transport Layer Security, SSL (Secure Sockets Layer) und/oder Secure Messaging Protocol.

System 2 kann weitere Datenverarbeitungsanlagen aufweisen, die ebenfalls Datenverarbeitungsanlage 1 entsprechen und über ihre jeweilige Netzwerkschnittstelle mit dem Internet 250 verbunden sein.

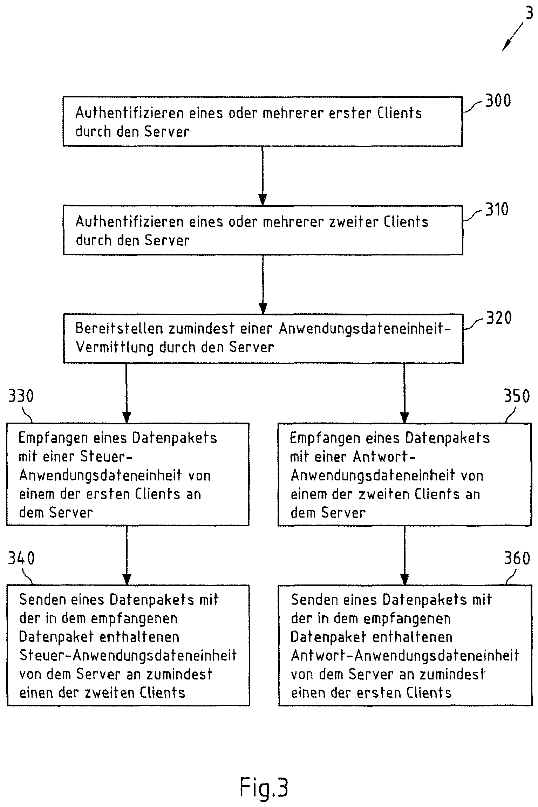

Im Folgenden wird für die Beschreibung der Fig. 3 bis 5 beispielhaft davon ausgegangen, das Client 210 über eine von Server 200 bereitgestellte Anwendungsdateneinheit-Vermittlung auf eine mit Chipkartenterminal 220 verbunden Chipkarte und/oder auf eine mit Computer 230 verbundene Chipkarte zugreift. Dementsprechend soll Client 210 im Folgenden als Beispiel für einen ersten erfindungsgemäßen Client, das Chipkartenterminal 220 und/oder der Computer 230 als Beispiel für einen zweiten erfindungsgemäßen Client und der Server 200 als Beispiel für einen erfindungsgemäßen Server verstanden werden.

Fig. 3 ist ein Ablaufdiagramm 3 mit Schritten einer beispielhaften Ausführungsform des ersten erfindungsgemäßen Verfahrens, die auf dem Server 200 ablaufen. Zum Beispiel veranlassen Programmanweisungen eines Computerprogramms wie einem Server-Programm, das von einem Prozessor des Servers 200 ausgeführt wird, das Server 200 die Schritte des Ablaufdiagramms 3 ausführt.

In einem Schritt 300 authentifiziert Server 200 Client 210. Beispielsweise überprüft der Server, ob Client 210 für eine Nutzung der vom Server 200 bereitgestellten Anwendungsdateneinheit-Vermittlung autorisiert ist. Zum Beispiel empfängt der Server 200 über Netzwerkverbindung 250 von Client 210 Anmeldeinformationen für eine Anmeldung für die vom Server 200 bereitgestellte Anwendungsdateneinheit-Vermittlung.

Zum Beispiel hat der Server 200 Zugriff auf entsprechende Autorisierungsinformationen. Die Autorisierungsinformationen sind zum Beispiel für jeden ersten Client und/oder jeden zweiten Client individualisiert. Zum Beispiel umfassen die Autorisierungsinformationen zu den Anmeldeinformationen korrespondierende Informationen wie einen Benutzernamen (z.B. eine E-Mail-Adresse, eine Kundenummer oder eine Registrierungsnummer), ein Passwort, ein Authentisierungsmerkmal, ein biometrisches Merkmal und/oder einen eindeutigen Identifikator des jeweiligen Clients (z.B. eine Media-Access-Control-Adresse oder eine International Mobile Subscriber Identity). Ferner können die Autorisierungsinformationen eine Information umfassen, ob Client 210 für die Benutzung der Anwendungsdateneinheit-Vermittlung autorisiert ist. Die Autorisierungsinformationen können beispielsweise im Verzeichnisdienst des Servers 290 gespeichert sein und dort vom Server 200 abgefragt werden.

In einem Schritt 310 authentifiziert Server 200 Chipkartenterminal 220 und Computer 230. Beispielsweise überprüft der Server 200, ob Chipkartenterminal 220 und Computer 230 für eine Nutzung der vom Server 200 bereitgestellten Anwendungsdateneinheit-Vermittlung autorisiert sind. Zum Beispiel empfängt der Server 200 über die Netzwerkverbindungen 270 sowie 280 und 260 von Chipkartenterminal 220 und Computer 230 Anmeldeinformationen für eine Anmeldung für die vom Server bereitgestellte Anwendungsdateneinheit-Vermittlung.

Zum Beispiel hat der Server 200 Zugriff auf entsprechende Autorisierungsinformationen. Die Autorisierungsinformationen sind, wie oben beschrieben, zum Beispiel für jeden ersten Client und/oder jeden zweiten Client individualisiert und umfassen zu den Anmeldeinformationen korrespondierende Informationen. Ferner können die Autorisierungsinformationen eine Information umfassen, ob das Chipkartenterminal 220 und der Computer 230 für die Benutzung der Anwendungsdateneinheit-Vermittlung autorisiert sind. Die Autorisierungsinformationen können beispielsweise im Verzeichnisdienst des Servers 290 gespeichert sein und dort vom Server 200 abgefragt werden.

In einem Schritt 320 stellt der Server 200 die Anwendungsdateneinheit-Vermittlung für den Client 210, das Chipkartenterminal 220 und den Computer 230 bereit. Zum Beispiel stellt der Server 200 die Anwendungsdateneinheit-Vermittlung nur dafür authentifizierten Clients bereit. Zum Beispiel wird Client 210 von einer Bank zur Verwaltung der von der Bank ausgegebenen Bankkarten betrieben. Chipkartenterminal 220 ist beispielsweise ein Bezahlterminal, das zum Beispiel von Kunden der Bank für bargeldloses Bezahlen mit Bankkarten der Bank genutzt wird, und Computer 230 ist zum Beispiel ein Computer, der zum Beispiel von einem Kunden der Bank für Homebanking genutzt wird. Zum Beispiel stellt der Server die Anwendungsdateneinheit-Vermittlung für die Vermittlung von Anwendungsdateneinheiten zwischen dem Client 210 der Bank und allen mit Bankkarten der Bank verbundenen zweiten Clients wie Chipkartenterminal 220 und Computer 230 bereit.

Der Server 200 stellt die Anwendungsdateneinheit-Vermittlung beispielsweise derart bereit, dass, wenn ein Datenpaket mit einer Steuer-Anwendungsdateneinheit von Client 210 über Netzwerkverbindung 250 an dem Server 200 empfangen wird, der Server 200 ein Datenpaket mit der in dem empfangenen Datenpaket enthaltenen Steuer-Anwendungsdateneinheit über Netzwerkverbindung 270 an das Chipkartenterminal 220 und/oder über Netzwerkverbindung 260 an den Computer 230 (z.B. gemäß einer vorgegebenen Zuordnung) sendet, und/oder dass, wenn ein Datenpaket mit einer Antwort-Anwendungsdateneinheit über Netzwerkverbindung 270 von dem Chipkartenterminal 220 und/oder über Netzwerkverbindung 260 von dem Computer 230 an dem Server 200 empfangen wird, der Server 200 ein Datenpaket mit der in dem empfangenen Datenpaket enthaltenen Antwort-Anwendungsdateneinheit über Netzwerkverbindung 250 an den Client 210 (z.B. gemäß einer vorgegebenen Zuordnung) sendet.

Eine Steuer-Anwendungsdateneinheit ist beispielsweise eine Command Application Protocol Data Unit (Command-APDU), und eine Antwort-Anwendungsdateneinheit ist beispielsweise eine Response Application Protocol Data Unit (Response-APDU). Unter einer APDU soll insbesondere eine Dateneinheit nach dem ISO 7816-4 Standard verstanden werden.

Zum Beispiel ist die durch den Server 200 bereitgestellte Anwendungsdateneinheit-Vermittlung derart eingerichtet, dass eine am Server 200 empfangene Anwendungsdateneinheit (also eine in einem empfangenen Datenpaket enthaltene Anwendungsdateneinheit) gemäß einer vorgegebenen Zuordnung zwischen den dem Client 210 und dem Chipkartenterminal 220 sowie dem Computer 230 vermittelt wird. Zum Beispiel enthält ein am Server 200 empfangenes Datenpaket und/oder die darin enthaltene Anwendungsdateneinheit eine Zuordnungsinformation, die eine Zuordnung vorgibt, an welchen Client oder welche Clients der Server ein Datenpaket mit der in dem empfangenen Datenpaket enthaltenen Anwendungsdateneinheit senden soll.

Optional ist die zumindest eine durch den Server 200 bereitgestellte Anwendungsdateneinheit-Vermittlung ferner derart eingerichtet, dass, wenn ein Datenpaket mit einer Zustandsinformation von Chipkartenterminal 220 oder Computer 230 am Server 200 empfangen wird, der Server 200 ein Datenpaket mit der in dem empfangenen Datenpaket enthaltenen Zustandsinformationen an Client 210 sendet. Zum Beispiel hat sich Client 210 für den Empfang der Zustandsinformationen von Chipkartenterminal 220 und Computer 230 an Server 200 angemeldet. Zum Beispiel enthalten die Anmeldeinformationen und/oder die Autorisierungsinformationen entsprechende Informationen.

Die folgenden optionalen Schritte 330 und 340 werden beispielsweise stets ausgeführt, wenn der Server 200 mit einer Steuer-Anwendungsdateneinheit von dem Client 210 empfängt. Die folgenden Schritte 330 und 340 können alternativ oder zusätzlich zu den Schritten 350 und 360 ausgeführt werden.

In einem optionalen Schritt 330 empfängt der Server 200 ein Datenpaket mit einer Steuer-Anwendungsdateneinheit von dem Client 210. Zum Beispiel empfängt der Server 200 über Netzwerkverbindung 250 ein Datenpaket mit einer Steuer-Anwendungsdateneinheit von dem Client 210. Zum Beispiel enthält das Datenpaket die Steuer-Anwendungsdateneinheit als Nutzdaten.

Ferner kann das Datenpaket beispielsweise Zuordnungsinformationen als Nutzdaten enthalten. Die Zuordnungsinformationen können beispielsweise einen eindeutigen Bezeichner des Clients enthalten, der die Steuer-Anwendungsdateneinheit empfangen soll. Wenn beispielsweise das von Client 210 empfangene Datenpaket solche Zuordnungsinformationen enthält, überprüft der Server 200 beispielsweise zunächst, ob der Client 210 für die durch die Zuordnungsinformationen vorgegebene Zuordnung autorisiert ist. Zum Beispiel enthalten die Autorisierungsinformationen Informationen darüber, ob Client 210 für eine Zuordnung autorisiert ist.

In einem optionalen Schritt 340 sendet der Server 200 ein Datenpaket mit der in dem empfangenen Datenpaket enthaltenen Steuer-Anwendungsdateneinheit von dem Server an das Chipkartenterminal 220 und/oder an den Computer 230. Zum Beispiel sendet der Server 200 ein Datenpaket mit der in dem empfangenen Datenpaket enthaltenen Steuer-Anwendungsdateneinheit von dem Server über Netzwerkverbindung 270 an das Chipkartenterminal 220 und/oder über Netzwerkverbindung 260 an den Computer 230. Zum Beispiel entnimmt der Server 200 die Steuer-Anwendungsdateneinheit aus dem empfangenen Datenpaket und erzeugt ein neues Datenpaket (oder mehrere neue Datenpakete) mit der Steuer-Anwendungsdateneinheit zum Senden an das Chipkartenterminal 220 und/oder den Computer 230. Zum Beispiel enthält das neu erzeugte Datenpaket (oder die neu erzeugten Datenpakete) die Steuer-Anwendungsdateneinheit als Nutzdaten. Zum Beispiel sendet der Server das neu erzeugte Datenpaket (oder die neu erzeugten Datenpakete) mit der Steuer-Anwendungsdateneinheit abhängig von der durch die Zuordnungsinformationen vorgegebenen Zuordnung an das Chipkartenterminal 220 und/oder den Computer 230. Zum Beispiel sendet der Server das neu erzeugte Datenpaket (oder die neu erzeugten Datenpakete) mit der Steuer-Anwendungsdateneinheit abhängig von der durch die Zuordnungsinformationen vorgegebenen Zuordnung nur dann an das Chipkartenterminal 220 und/oder den Computer 230, wenn der Client 210 für die Zuordnung auch autorisiert ist.

Die folgenden optionalen Schritte 350 und 360 werden beispielsweise stets ausgeführt, wenn der Server 200 ein Datenpaket mit einer Antwort-Anwendungsdateneinheit von dem Chipkartenterminal 220 oder von dem Computer 230 empfängt. Die folgenden Schritte 350 und 360 können alternativ oder zusätzlich zu den Schritten 330 und 340 ausgeführt werden.

In einem optionalen Schritt 350 empfängt der Server 200 ein Datenpaket mit einer Antwort-Anwendungsdateneinheit über Netzwerkverbindung 270 von dem Chipkartenterminal 220 oder über Netzwerkverbindung 260 von dem Computer 230. Zum Beispiel empfängt der Server 200 ein Datenpaket mit einer Antwort-Anwendungsdateneinheit über Netzwerkverbindung 270 von dem Chipkartenterminal 220 oder über Netzwerkverbindung 260 von dem Computer 230. Zum Beispiel enthält das Datenpaket die Antwort-Anwendungsdateneinheit als Nutzdaten.

Ferner kann das Datenpaket beispielsweise Zuordnungsinformationen als Nutzdaten enthalten. Die Zuordnungsinformationen können beispielsweise einen eindeutigen Bezeichner des Clients enthalten, der die Antwort-Anwendungsdateneinheit empfangen soll. Wenn beispielsweise ein vom Chipkartenterminal 220 empfangenes Datenpaket solche Zuordnungsinformationen enthält, überprüft der Server beispielsweise zunächst, ob das Chipkartenterminal 220 für die durch die Zuordnungsinformationen vorgegebene Zuordnung autorisiert ist. Zum Beispiel enthalten die Autorisierungsinformationen Informationen darüber, ob Chipkartenterminal 220 für eine Zuordnung autorisiert ist.

In einem optionalen Schritt 360 sendet der Server 200 ein Datenpaket mit der in dem empfangenen Datenpaket enthaltenen Antwort-Anwendungsdateneinheit an den Client 210. Zum Beispiel sendet der Server 200 ein Datenpaket mit der in dem empfangenen Datenpaket enthaltenen Antwort-Anwendungsdateneinheit über Netzwerkverbindung 250 an den Client 210. Zum Beispiel entnimmt der Server 200 die Antwort-Anwendungsdateneinheit aus dem empfangenen Datenpaket und erzeugt ein neues Datenpaket (oder mehrere neue Datenpakete) mit der Antwort-Anwendungsdateneinheit zum Senden an den Client 210. Zum Beispiel enthält das neu erzeugte Datenpaket die Antwort-Anwendungsdateneinheit als Nutzdaten. Zum Beispiel sendet der Server das neu erzeugte Datenpaket mit der Antwort-Anwendungsdateneinheit abhängig von der durch die Zuordnungsinformationen vorgegebenen Zuordnung an den Client 210.

Wenn beispielsweise ein vom Chipkartenterminal 220 empfangenes Datenpaket solche Zuordnungsinformationen enthält, sendet der Server das neu erzeugte Datenpaket (oder die neu erzeugten Datenpakete) mit der Antwort-Anwendungsdateneinheit abhängig von der durch die Zuordnungsinformationen vorgegebenen Zuordnung nur dann an Client 210, wenn das Chipkartenterminal 220 für die Zuordnung auch autorisiert ist.

Der Server 200 kann neben der oben beschriebenen Anwendungsdateneinheiten-Vermittlung für den Client 210, das Chipkartenterminal 220 und den Computer 230 weitere Anwendungsdateneinheiten-Vermittlungen für weitere erste und zweite Clients bereitstellen. Für diese weiteren Anwendungsdateneinheiten-Vermittlungen führt der Server 200 die Schritte 300 bis 370 mit den weiteren ersten und zweiten Clients durch. Die Anwendungsdateneinheiten-Vermittlung des Servers kann eine 1:1-Zuordnung (ein erster Client zu einem zweiten Client), eine 1:n-Zuordnung (ein erster Client zu allen zweiten Clients), eine n:1-Zuordnung (alle ersten Clients zu einem zweiten Client) und eine n:n-Zuordnung (alle ersten Clients zu allen zweiten Clients) ermöglichen.

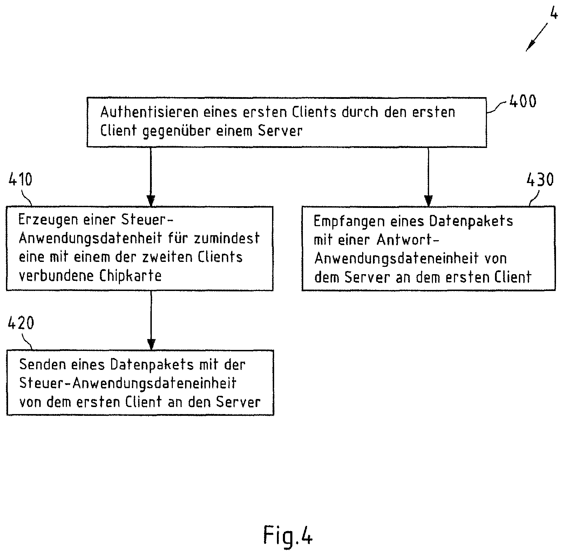

Fig. 4 ist ein Ablaufdiagramm 4 mit Schritten einer beispielhaften Ausführungsform des zweiten erfindungsgemäßen Verfahrens, die auf dem Client 210 ablaufen. Zum Beispiel veranlassen Programmanweisungen eines Computerprogramms wie einer Chipkartenanwendung (z.B. Schritt 410) und einem Client-Programm (z.B. Schritte 400 und 420 bis 430), das von einem Prozessor des Clients 210 ausgeführt wird, das Client 210 die Schritte des Ablaufdiagramms 4 ausführt. Zum Beispiel stellt das Client-Programm eine Schnittstelle für das Zugreifen auf eine Chipkarte über die vom Server 200 bereitgestellte Anwendungsdateneinheit-Vermittlung zur Verfügung. Zum Beispiel ist die Schnittstelle ein virtueller Gerätetreiber für ein Chipkartenzugriffsgerät (z.B. ein virtueller PC/SC Gerätetreiber) und/oder eine Programmierschnittstelle (API, Application Programming Interface). Zum Beispiel nutzt die Chipkartenanwendung die Schnittstelle, um auf eine oder mehrere Chipkarten über die vom Server 200 bereitgestellte Anwendungsdateneinheit-Vermittlung zuzugreifen.

In einem Schritt 400 authentisiert sich Client 210 gegenüber dem Server 200. Beispielsweise meldet sich Client 210 beim Server 200 an, um die vom Server 200 bereitgestellte Anwendungsdateneinheit-Vermittlung zu nutzen. Zum Beispiel dürfen nur beim Server 200 angemeldete Clients die Anwendungsdateneinheit-Vermittlung benutzen. Zum Beispiel sendet Client 210 Anmeldeinformationen an den Server. Zum Beispiel sendet Client 210 Anmeldeinformationen über Netzwerkverbindung 250 an den Server 200.

Die Anmeldeinformationen sind zum Beispiel für Client 210 oder den Betreiber von Client 210 individualisiert. Zum Beispiel umfassen die Anmeldeinformationen einen Benutzernamen (z.B. eine E-Mail-Adresse, eine Kundenummer oder eine Registrierungsnummer), ein Passwort, ein Authentisierungsmerkmal, ein biometrisches Merkmal und/oder einen eindeutigen Identifikator des jeweiligen Clients (z.B. eine Media-Access-Control-Adresse oder eine International Mobile Subscriber Identity).

Die Anmeldeinformationen können zumindest teilweise von einem Benutzer an einem Ein-/Ausgabegerät des Clients 210 eingegeben und/oder zumindest teilweise durch ein Ein-/Ausgabegerät und/oder ein Chipkartenzugriffsgerät des Clients 210 eingelesen werden. Zum Beispiel kann ein Benutzer jeweils einen Benutzernamen und ein Passwort an dem Client 210 als Anmeldeinformationen eingeben. Zum Beispiel kann ein Authentisierungsmerkmal von einem Sicherheitstoken wie einer Chipkarte und/oder ein biometrisches Merkmal eines Benutzers als Anmeldeinformationen durch den Client 210 eingelesen werden.

Nach erfolgter Authentifizierung des Clients 210 durch den Server (vgl. Schritt 300) kann der Client 210 beispielsweise die von dem Server 200 bereitgestellte Anwendungsdateneinheit-Vermittlung (vgl. Schritt 330) nutzen, um auf eine mit dem Chipkartenterminal 220 und/oder dem Computer 230 verbundene Chipkarte zuzugreifen.

Die folgenden optionalen Schritte 410 und 420 werden beispielsweise stets ausgeführt, wenn der Client 210 eine Steuer-Anwendungsdateneinheit für eine mit dem Chipkartenterminal 220 und/oder dem Computer 230 verbundene Chipkarte erzeugt. Die folgenden Schritte 410 und 420 können alternativ oder zusätzlich zu dem Schritt 430 ausgeführt werden

In einem optionalen Schritt 410 erzeugt der Client 210 eine Steuer-Anwendungsdateneinheit für zumindest eine mit dem Chipkartenterminal 220 und/oder dem Computer 230 verbundene Chipkarte. Die Steuer-Anwendungsdateneinheit enthält zum Beispiel eine Anweisung für die Chipkarte.

Ferner kann der Client 210 beispielsweise Zuordnungsinformationen mit einem eindeutigen Bezeichner für jeden Client erzeugen, der die Steuer-Anwendungsdateneinheit empfangen soll.

In einem optionalen Schritt 420 sendet der Client 210 ein Datenpaket mit der erzeugten Steuer-Anwendungsdateneinheit an den Server 200. Zum Beispiel sendet der Client 210 ein Datenpaket mit der erzeugten Steuer-Anwendungsdateneinheit über Netzwerkverbindung 250 an den Server 200. Zum Beispiel erzeugt der Client 210 ein neues Datenpaket mit der Steuer-Anwendungsdateneinheit zum Senden an den Server 200. Zum Beispiel enthält das neu erzeugte Datenpaket die Steuer-Anwendungsdateneinheit als Nutzdaten. Zum Beispiel enthält das neu erzeugte Datenpaket ferner die Zuordnungsinformationen.

Der folgende Schritt 430 wird beispielsweise stets ausgeführt, wenn der Client 210 eine Antwort-Anwendungsdateneinheit von dem Server 200 empfängt. Der folgende Schritt 430 kann alternativ oder zusätzlich zu den Schritten 410 und 420 ausgeführt werden.

In einem optionalen Schritt 430 empfängt der Client 210 ein Datenpaket mit einer Antwort-Anwendungsdateneinheit von dem Server 200. Zum Beispiel ist die Antwort-Anwendungsdateneinheit in dem Datenpaket als Nutzdaten enthalten. Zum Beispiel wurde die Antwort-Anwendungsdateneinheit von einer mit dem Chipkartenterminal 220 und/oder dem Computer 230 verbundenen Chipkarte erzeugt. Zum Beispiel entnimmt der Client 210 die Antwort-Anwendungsdateneinheit aus dem empfangenen Datenpaket, so dass die Antwort-Anwendungsdateneinheit von einer von einem Prozessor des Clients 210 ausgeführten Chipkartenanwendung weiterverarbeitet werden kann.

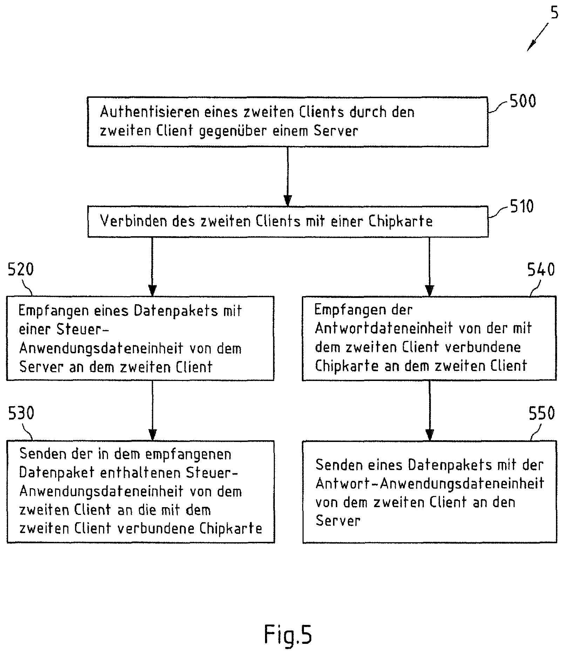

Fig. 5 ist ein Ablaufdiagramm 5 mit Schritten einer beispielhaften Ausführungsform des dritten erfindungsgemäßen Verfahrens, die auf dem Chipkartenterminal 220 oder dem Computer 230 ablaufen. Im Folgenden wird lediglich beispielhaft stets Bezug auf Computer 230 genommen. Zum Beispiel veranlassen Programmanweisungen eines Computerprogramms wie einem Gerätetreiberprogramm für ein Chipkartenzugriffsgerät (z.B. Schritte 510, 530 und 540) und einem Agenten-Programm (z.B. Schritte 500, 520 und 550), das von einem Prozessor des Computers 230 ausgeführt wird, das Computer 230 die Schritte des Ablaufdiagramms 5 ausführt. Zum Beispiel wirkt das Agenten-Programm mit dem Gerätetreiberprogramm für das Chipkartenzugriffsgerät zusammen, um ein Zugreifen auf eine mit dem Computer 230 verbundene Chipkarte über die von dem Server 200 bereitgestellte Anwendungsdateneinheit-Vermittlung zu ermöglichen. Zum Beispiel stellt das Gerätetreiberprogramm für das Chipkartenzugriffsgerät anderen Computerprogrammen wie dem Agenten-Programm eine Schnittstelle (z.B. eine Programmierschnittstelle) zum Zugreifen auf eine Chipkarte über das Chipkartenzugriffsgerät bereit.

In einem Schritt 500 authentisiert sich Computer 230 gegenüber dem Server 200. Beispielsweise meldet sich Computer 230 beim Server 200 an, um die vom Server 200 bereitgestellte Anwendungsdateneinheit-Vermittlung zu nutzen. Zum Beispiel dürfen nur beim Server 200 angemeldete Clients die Anwendungsdateneinheit-Vermittlung benutzen. Zum Beispiel sendet Computer 230 Anmeldeinformationen an den Server. Zum Beispiel sendet Computer 230 Anmeldeinformationen über Netzwerkverbindung 260 an den Server 200.

Die Anmeldeinformationen sind zum Beispiel für Computer 230 oder den Benutzer von Computer 230 individualisiert. Zum Beispiel umfassen die Anmeldeinformationen einen Benutzernamen (z.B. eine E-Mail-Adresse, eine Kundenummer oder eine Registrierungsnummer), ein Passwort, ein Authentisierungsmerkmal, ein biometrisches Merkmal und/oder einen eindeutigen Identifikator des jeweiligen Clients (z.B. eine Media-Access-Control-Adresse oder eine International Mobile Subscriber Identity).

Die Anmeldeinformationen können zumindest teilweise von einem Benutzer an einem Ein-/Ausgabegerät des Computers 230 eingegeben und/oder zumindest teilweise durch ein Ein-/Ausgabegerät und/oder ein Chipkartenzugriffsgerät des Computers 230 eingelesen werden. Zum Beispiel kann ein Benutzer jeweils einen Benutzernamen und ein Passwort an dem Computer 230 als Anmeldeinformationen eingeben. Zum Beispiel kann ein Authentisierungsmerkmal von einem Sicherheitstoken wie einer Chipkarte und/oder ein biometrisches Merkmal eines Benutzers als Anmeldeinformationen durch den Computer 230 eingelesen werden.

Nach erfolgter Authentifizierung des Computers 230 durch den Server (vgl. Schritt 300) können am Server 200 für die von dem Server 200 bereitgestellte Anwendungsdateneinheit-Vermittlung angemeldete erste Clients (d.h. durch den Server 200 für die von dem Server 200 bereitgestellte Anwendungsdateneinheit-Vermittlung authentifizierte erste Clients) beispielsweise die von dem Server 200 bereitgestellte Anwendungsdateneinheit-Vermittlung nutzen, um auf eine mit dem Computer 230 verbundene Chipkarte zuzugreifen.

In einem optionalen Schritt 510 verbindet sich Computer 230 mit einer Chipkarte. Der optionale Schritt 510 kann beispielsweise auch vor Schritt 500 ausgeführt werden, beispielsweise wenn für die Authentisierung des Computers 230 gegenüber dem Server 200 ein auf der Chipkarte gespeichertes Authentisierungsmerkmal als Anmeldeinformation eingelesen werden muss.

Unter Verbinden des Computers 230 mit der Chipkarte soll beispielsweise verstanden werden, dass eine logische Verbindung von dem Computer 230 zu der Chipkarte hergestellt wird, über die Daten und/oder Informationen (z.B. in Form von Anwendungsdateneinheiten) gesendet und empfangen werden können. Eine logische Verbindung wird zum Beispiel durch das Aushandeln von Kommunikationsparametern und/oder das Senden und Empfangen von Daten und/oder Informationen hergestellt. Zum Beispiel kann sich der Computer 230 mit einer Chipkarte verbinden, indem er Kommunikationsparameter mit der Chipkarte aushandelt und/oder auf die Chipkarte zugreift. Zum Beispiel ist der Computer 230 mit der Chipkarte verbunden, sobald sich die Chipkarte in dem Chipkartenzugriffsgerät des Computers 230 befindet und Computer 230 auf die Chipkarte zugreifen kann.

Die Verbindung von dem Computer 230 zu der Chipkarte kann sowohl drahtlos als auch drahtgebunden sein. Vorzugsweise ist der Computer 230 unmittelbar mit der Chipkarte verbunden.

Sobald der Computer 230 mit einer Chipkarte verbunden ist, erzeugt er beispielsweise optional eine entsprechende Zustandsinformation und sendet diese Zustandsinformation (z.B. über Netzwerkverbindung 260) an den Server 200.

Die folgenden optionalen Schritte 520 und 530 werden beispielsweise stets ausgeführt, wenn der Computer 230 ein Datenpaket mit einer Steuer-Anwendungsdateneinheit von dem Server 200 empfängt. Die folgenden Schritte 520 und 530 können alternativ oder zusätzlich zu den Schritten 540 und 550 ausgeführt werden.

In einem optionalen Schritt 520 empfängt Computer 230 ein Datenpaket mit einer Steuer-Anwendungsdateneinheit von dem Server 200. Zum Beispiel empfängt Computer 230 ein Datenpaket mit einer Steuer-Anwendungsdateneinheit über Netzwerkverbindung 260 von dem Server 200. Zum Beispiel wurde die Steuer-Anwendungsdateneinheit von dem Client 210 erzeugt. Zum Beispiel enthält das Datenpaket die Steuer-Anwendungsdateneinheit als Nutzdaten.

In einem optionalen Schritt 530 sendet Computer 230 die in dem empfangenen Datenpaket enthaltene Steuer-Anwendungsdateneinheit an die mit dem Computer 230 verbundene Chipkarte. Zum Beispiel entnimmt der Computer 230 die Steuer-Anwendungsdateneinheit aus dem empfangenen Datenpaket. Zum Beispiel sendet Computer 230 die in dem empfangenen Datenpaket enthaltene Steuer-Anwendungsdateneinheit über die logische Verbindung an die mit dem Computer 230 verbundene Chipkarte.

Die folgenden optionalen Schritte 540 und 550 werden beispielsweise stets ausgeführt, wenn der Computer 230 eine Antwort-Anwendungsdateneinheit von der mit dem Computer 230 verbundenen Chipkarte empfängt. Die folgenden Schritte 540 und 550 können alternativ oder zusätzlich zu den Schritten 520 und 530 ausgeführt werden.

In einem optionalen Schritt 540 empfängt Computer 230 eine Antwort-Anwendungsdateneinheit von der mit dem Chipkartenterminal verbundenen Chipkarte. Zum Beispiel empfängt Computer 230 die Antwort-Anwendungsdateneinheit über die logische Verbindung von der mit dem Chipkartenterminal verbundenen Chipkarte. Zum Beispiel wurde die Antwort-Anwendungsdateneinheit von der Chipkarte erzeugt.

Ferner kann der Client 210 beispielsweise Zuordnungsinformationen mit einem eindeutigen Bezeichner für jeden Client erzeugen, der die Antwort-Anwendungsdateneinheit empfangen soll.

In einem optionalen Schritt 550 sendet Computer 230 ein Datenpaket mit der Antwort-Anwendungsdateneinheit an den Server 200. Zum Beispiel sendet Computer 230 ein Datenpaket mit der Antwort-Anwendungsdateneinheit über Netzwerkverbindung 260 an den Server 200. Zum Beispiel erzeugt der Computer 230 ein Datenpaket mit der Antwort-Anwendungsdateneinheit zum Senden an den Server 200. Zum Beispiel enthält das neu erzeugte Datenpaket ferner die Zuordnungsinformationen.

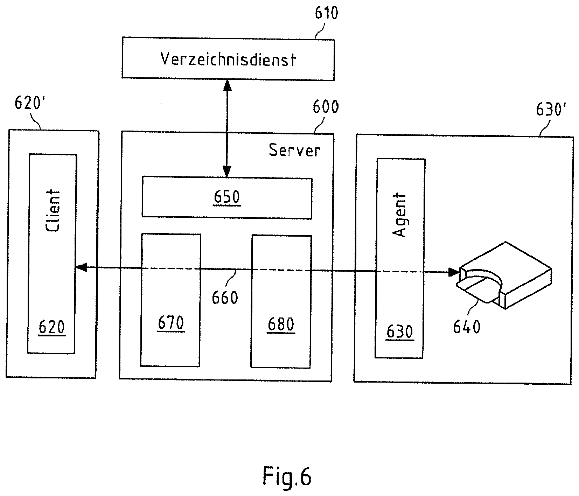

Fig. 6 zeigt ein Blockdiagramm einer beispielhaften Software-Architektur des erfindungsgemäßen Systems. In Fig. 6 sind lediglich beispielhaft Server 600 als erfindungsgemäßer Server, Verzeichnisdienst-Server 610, Client 620 und Agent 630 dargestellt.

Agent 630 ist beispielsweise ein Agenten-Programm, das von einem Prozessor eines zweiten erfindungsgemäßen Clients 630' ausgeführt wird. Agent 630 ist zum Beispiel eine Anwendung, die mit einem Gerätetreiber für eine Chipkarte (z.B. einem Gerätetreiber für ein Chipkartenzugriffsgerät und/oder einem PC/SC Gerätetreiber), der Teil des Betriebssystems bzw. der Betriebssystemschicht des Clients ist, und mit Server 600 kommuniziert. Zum Beispiel empfängt Agent 630 eine Steuer-Anwendungsdateneinheit (z.B. eine Command-APDU) von dem Server 600 und leitet sie weiter zu einer mit dem Client 630' verbundenen Chipkarte 640 (z.B. einer Smartcard). Die Antwort-Anwendungsdateneinheit (z.B. eine Response-APDU) von der Chipkarte 640 wird zurück an den Server 600 geleitet.

Client 620 ist beispielsweise ein Client-Programm, das von einem Prozessor eines ersten erfindungsgemäßen Clients 620' ausgeführt wird. Client 620 ist zum Beispiel eine Anwendung, die mit dem Server 600 über eine Netzwerkverbindung kommuniziert. Client 620 sendet zum Beispiel Steuer-Anwendungsdateneinheiten (z.B. Command-APDUs) an den Server 600 und empfängt Antwort-Anwendungsdateneinheiten (z.B. Response-APDUs) von Server 600.

Der Server 600 verwaltet beispielsweise die Verbindung zwischen einem Agenten wie Agent 630 und einem Client wie Client 620. Er leitet zum Beispiel eine von Client 620 gesendete Anwendungsdateneinheit (z.B. eine Command-APDU) zum Agenten 630 weiter und empfängt eine Anwendungsdateneinheit (z.B. eine Response-APDU) als Antwort von dem Agenten 630 und leitet sie zurück zu dem Client 620.

Dadurch kann Client 620 eine Steuer-Anwendungsdateneinheit an eine Chipkarte 600 senden und eine Antwort von dieser Chipkarte empfangen, unabhängig davon, wo die Chipkarte 600 ist und wie und mit welchem Host die Chipkarte verbunden ist. Es wird somit eine virtuelle Verbindung 660 zwischen Client 620 und Chipkarte 600 bereitgestellt.

Client 620 kann somit den Inhalt von Chipkarte 640 aus der Ferne modifizieren und eine kryptographische Funktion der Chipkarte 640 aus der Ferne verwenden. Der Vorteil gegenüber anderen Lösungen ist dabei unter anderem, dass lediglich Anwendungsdateneinheiten über ein Netzwerk (bzw. virtuelle Verbindung 660) ausgetauscht werden.

Um die über das Netzwerk bzw. die virtuelle Verbindung ausgetauschten Anwendungsdateneinheiten zu schützen, kann beispielsweise das Secure Messaging Protokoll verwendet werden. Die Schlüssel (z.B. private Schlüssel für eine Chipkartenverwaltung der Chipkarte 640, Benutzernamen, Passwörter, persönliche Identifizierungsnummern usw.) verlassen den Client 620 nicht. Sensible Informationen können somit in der geschützten Umgebung des Client 620 gespeichert werden. Dadurch kann eine sichere Chipkartenverwaltung durch den Client 620 erfolgen, unabhängig von der Umgebung des Agenten 630.

Jeder Client und jeder Agent muss sich beispielsweise gegenüber dem Server 600 authentifizieren, bevor sie kommunizieren dürfen. Dies stellt die Identität jedes Clients und jedes Agenten sicher.

Der Server 600 kann auch die Verbindung zwischen Clients und Agenten verwalten (Sitzungsverwaltung). Das heißt, dass beispielsweise nur ein autorisierter Client auf einen bestimmten Agenten zugreifen darf. Zum Beispiel werden 1:n, n:1 oder n:n Clients:Agenten-Zuordnungen unterstützt. Zum Beispiel kann Chipkarte 640 mit verschiedenen Clients 620 (z.B. von Clients 620 von verschiedenen Chipkarten-Anbietern) verwendet werden und/oder Client 620 kann von verschiedenen Chipkarten 640 verwendet werden.

Die Identitätsverwaltung und Sitzungsverwaltung durch den Server 600 werden beispielsweise beide durch die Verwendung einer Zugriffsbedingungsverwaltungs-Schnittstelle 650 implementiert, die mit dem Verzeichnisdienst 610 verbunden ist. Zur Verbindung mit dem Client 620 weist der Server 600 beispielsweise eine Client-Schnittstelle 670 auf. Zur Verbindung mit dem Agenten 630 weist der Server 600 beispielsweise eine Agenten-Schnittstelle 680 auf. Zum Beispiel werden die Zugriffsbedingungsverwaltungs-Schnittstelle 650, die Client-Schnittstelle 670 und die Agenten-Schnittstelle 680 durch ein von einem Prozessor des Servers 600 ausgeführtes Server-Programm bereitgestellt.

In einigen Fällen wird eine direkte Verbindung zwischen Client 620 und Agent 630 beispielsweise aufgrund einer Netzwerkkonfiguration oder einer Firewall verhindert. In diesem Fällen können über die virtuelle Verbindung 660 trotzdem Anwendungsdateneinheiten übertragen werden, da sowohl Client 620 als auch Agent 630 Clients des Servers 600 sind. Solange sich sowohl Client 620 als auch Agent 630 mit Server 600 verbinden können, können über die virtuelle Verbindung Anwendungsdateneinheiten zwischen Client 620 und Agent 630 übertragen werden.

Die Abfolge der einzelnen Verfahrenschritte in den einzelnen Ablaufdiagrammen ist nicht zwingend, soweit nicht anders angegeben sind alternative Abfolgen der Verfahrensschritte denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Unter die Formulierung "und/oder" fallen sowohl der Fall "und" als auch der Fall "oder". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Authentifizieren (300) eines oder mehrerer erster Clients (210) durch einen Server (200, 600),
- Authentifizieren (310) eines oder mehrerer zweiter Clients (220, 230) durch den Server (200, 600), und
- Bereitstellen (320) zumindest einer Anwendungsdateneinheit-Vermittlung durch den Server (200, 600) derart, dass, wenn ein Datenpaket mit einer Steuer-Anwendungsdateneinheit von einem der ersten Clients (210) an dem Server (200, 600) empfangen wird, der Server (200, 600) ein Datenpaket mit der in dem empfangenen Datenpaket enthaltenen Steuer-Anwendungsdateneinheit an zumindest einen der zweiten Clients (220, 230) gemäß einer Zuordnung zwischen dem einen oder den mehreren ersten Clients und dem einen oder den mehreren zweiten Clients sendet, und/oder dass, wenn ein Datenpaket mit einer Antwort-Anwendungsdateneinheit von einem der zweiten Clients (220, 230) an dem Server (200, 600) empfangen wird, der Server (200, 600) ein Datenpaket mit der in dem empfangenen Datenpaket enthaltenen Antwort-Anwendungsdateneinheit an zumindest einen der ersten Clients (210) gemäß einer Zuordnung zwischen dem einen oder den mehreren ersten Clients und dem einen oder den mehreren zweiten Clients sendet, wobei die Zuordnung eine Zuordnung zwischen einem ersten Client und mehreren zweiten Clients, eine Zuordnung zwischen mehreren ersten Clients und einem zweiten Client und/oder eine Zuordnung zwischen mehreren ersten Clients und mehreren zweiten Clients ist, und wobei die Zuordnung bestimmt, an welche Clients der Server ein Datenpaket mit einer Anwendungsdateneinheit senden soll.

2. Verfahren gemäß Anspruch 1, ferner umfassend:
- Empfangen (330) eines Datenpakets mit einer Steuer-Anwendungsdateneinheit von einem der ersten Clients (210) an dem Server (200), und
- Senden (340) eines Datenpakets mit der in dem empfangenen Datenpaket enthaltenen Steuer-Anwendungsdateneinheit von dem Server (200, 600) an zumindest einen der zweiten Clients (220, 230).

3. Verfahren gemäß Anspruch 2, wobei der Server (200, 600) das Datenpaket abhängig von der Zuordnung an den zumindest einen der zweiten Clients (220, 230) sendet.

4. Verfahren gemäß einem der Ansprüche 1 bis 3, ferner umfassend:
- Empfangen (350) eines Datenpakets mit einer Antwort-Anwendungsdateneinheit von einem der zweiten Clients (220, 230) an dem Server (200), und
- Senden (360) eines Datenpakets mit der in dem empfangenen Datenpaket enthaltenen Antwort-Anwendungsdateneinheit von dem Server (200, 600) an zumindest einen der ersten Clients (210).

5. Verfahren gemäß Anspruch 4, wobei der Server (200, 600) das Datenpaket abhängig von der Zuordnung an den zumindest einen der ersten Clients (210) sendet.

6. Verfahren gemäß einem der Ansprüche 1 bis 5, wobei die ersten Clients (210) und die zweiten Clients (220, 230) durch den Server (200, 600) für die zumindest eine Anwendungsdateneinheit-Vermittlung authentifiziert werden.

7. Verfahren gemäß einem der Ansprüche 1 bis 6, ferner umfassend:
- Überprüfen, wenn ein Datenpaket mit einer Steuer-Anwendungsdateneinheit von einem der ersten Clients (210) an dem Server (200, 600) empfangen wird, ob der erste Client für die Zuordnung autorisiert ist, und/oder
- Überprüfen, wenn ein Datenpaket mit einer Antwort-Anwendungsdateneinheit von einem der zweiten Clients (220, 230) an dem Server (200, 600) empfangen wird, ob der zweite Client für die Zuordnung autorisiert ist.

8. Verfahren gemäß einem der Ansprüche 1 bis 7, ferner umfassend:
- Zugreifen auf eine Chipkarte (640) über die Anwendungsdateneinheit-Vermittlung.

9. Verfahren gemäß einem der Ansprüche 1 bis 8, wobei die Steuer-Anwendungsdateneinheit eine Anweisung für eine Chipkarte (640) enthält.

10. Verfahren gemäß einem der Ansprüche 1 bis 9, wobei die Antwort-Anwendungsdateneinheit eine Antwort von einer Chipkarte (640) auf eine Anweisung enthält.

11. Verfahren gemäß einem der Ansprüche 1 bis 10, wobei die Steuer-Anwendungsdateneinheit eine Command Application Protocol Data Unit, Command-APDU, ist, und wobei die Antwort-Anwendungsdateneinheit eine Response Application Protocol Data Unit, Response-APDU, ist.

12. Verfahren gemäß einem der Ansprüche 1 bis 11, wobei das Empfangen und das Senden der Datenpakete über zumindest ein Netzwerk (240) erfolgen.

13. Verfahren gemäß Anspruch 12, wobei die Übertragung der Datenpakete in dem zumindest einem Netzwerk (240) gemäß einem paketvermittelten Transportprotokoll erfolgt, und/oder wobei die Übertragung der Datenpakete in dem zumindest einem Netzwerk (240) verschlüsselt erfolgt.

14. Server (200), umfassend:
- ein oder mehrere Mittel zum Ausführen der Schritte des Verfahrens nach einem der Ansprüche 1 bis 13.

15. Computerprogramm, umfassend:
- Programmanweisungen, die eine Datenverarbeitungsanlage (1) zur Ausführung der Schritte des Verfahrens nach einem der Ansprüche 1 bis 13 veranlassen, wenn das Computerprogramm auf einem Prozessor (100) der Datenverarbeitungsanlage (1) ausgeführt wird.

## Claims

1. Method comprising:
- authenticating (300) one or more first clients (210) by a server (200, 600),
- authenticating (310) one or more second clients (220, 230) by the server (200, 600), and
- providing (320) at least one application data unit switching by the server (200, 600) such that, when a data packet having a control application data unit is received from one of the first clients (210) at the server (200, 600), the server (200, 600) sends a data packet having the control application data unit that the received data packet contains to at least one of the second clients (220, 230) according to a mapping between the one or more first clients and the one or more second clients, and/or that, when a data packet having a response application data unit is received from one of the second clients (220, 230) at the server (200, 600), the server (200, 600) sends a data packet having the response application data unit that the received data packet contains to at least one of the first clients (210) according to a mapping between the one or more first clients and the one or more second clients, wherein the mapping is a mapping between a first client and a plurality of second clients, a mapping between a plurality of first clients and a second client and/or a mapping between a plurality of first clients and a plurality of second clients, and wherein the mapping determines the clients to which the server is to send a data packet having an application data unit.

2. Method according to Claim 1, further comprising:
- receiving (330) a data packet with a control application data unit from one of the first clients (210) at the server (200), and
- sending (340) a data packet with the control application data unit that the received data packet contains from the server (200, 600) to at least one of the second clients (220, 230).

3. Method according to Claim 2, wherein the server (200, 600) sends the data packet to the at least one of the second clients (220, 230) according to the mapping.

4. Method according to any one of Claims 1-3, further comprising:
- receiving (350) a data packet with a response application data unit from one of the second clients (220, 230) at the server (200), and
- sending (360) a data packet with the response application data unit that the received data packet contains from the server (200, 600) to at least one of the first clients (210).

5. Method according to Claim 4, wherein the server (200, 600) sends the data packet to the at least one of the first clients (210) according to the mapping.

6. Method according to any one of Claims 1 - 5, wherein the first clients (210) and the second clients (220, 230) are authenticated by the server (200, 600) for the at least one application data unit switching.

7. Method according to any one of Claims 1 - 6, further comprising:
- checking, when a data packet having a control application data unit is received from one of the first clients (210) at the server (200, 600), whether the first client is authorised for the mapping, and/or
- checking, when a data packet having a response application data unit is received from one of the second clients (220, 230) at the server (200, 600), whether the second client is authorised for the mapping.

8. Method according to any one of Claims 1 - 7, further comprising:
- accessing a chip card (640) via the application data unit switching.

9. Method according to any one of Claims 1 - 8, wherein the control application data unit contains an instruction for a chip card (640).

10. Method according to any one of Claims 1 - 9, wherein the response application data unit contains a response from a chip card (640) to an instruction.

11. Method according to any one of Claims 1 - 10, wherein the control application data unit is a Command Application Protocol Data Unit, Command-APDU, and wherein the response application data unit is a Response Application Protocol Data Unit, Response-APDU.

12. Method according to any one of Claims 1 - 11, wherein the receiving and sending of the data packets take place via at least one network (240).

13. Method according to Claim 12, wherein the transmission of the data packets takes place in the at least one network (240) according to a packet-switched transport protocol and/or wherein the transmission of the data packets in the at least one network (240) takes place encrypted.

14. Server (200), comprising:
- one or more means for carrying out the steps of the method according to any one of Claims 1 - 13.

15. Computer program, comprising:
- program instructions that cause a data processing system (1) to carry out the steps of the method according to any one of Claims 1 - 13, when the computer program is executed on a processor (100) of the data processing system (1).

## Revendications

1. Procédé, comprenant:
- l'authentification (300) d'un ou de plusieurs premiers clients (210) par un serveur (200, 600),
- l'authentification (310) d'un ou de plusieurs deuxièmes clients (220,230) par le serveur (200, 600), et
- la mise à disposition (320) d'au moins une transmission d'unité de données d'application par le serveur (200, 600) de manière à ce que, lors de la réception d'un paquet de données avec une unité de données d'application de commande de l'un des premiers clients (210) sur le serveur (200, 600), le serveur (200, 600) envoie un paquet de données, avec l'unité de données d'application de commande contenue dans le paquet de données reçu, à au moins l'un des deuxièmes clients (220, 230), conformément à une association entre l'un ou plusieurs des premiers clients et l'un ou plusieurs des deuxièmes clients, et / ou que, quand un paquet de données est reçu sur le serveur (200, 600), avec une unité de données d'application de réponse de l'un des deuxièmes clients (220, 230), le serveur (200, 600) envoie un paquet de données, avec l'unité de données d'application de réponse contenue dans le paquet de données reçu, à au moins l'un des premiers clients (210) conformément à une association entre l'un ou plusieurs des premiers clients et l'un ou plusieurs des deuxièmes clients, sachant que l'association est une association entre un premier client et plusieurs deuxièmes clients, et sachant que l'association détermine à quels clients le serveur doit envoyer un paquet de données avec une unité de données d'application.

2. Procédé selon la revendication 1, comprenant en outre:
- la réception (330) d'un paquet de données avec une unité de données d'application de commande d'un premier client (210) sur le serveur (200), et
- l'envoi (340) d'un paquet de données, avec l'unité de données d'application de commande contenue dans le paquet de données reçu, par le serveur (200, 600) à au moins l'un des deuxièmes clients (220, 230).

3. Procédé selon la revendication 2, sachant que le serveur (200, 600) envoie le paquet de données en fonction de l'association à au moins l'un des deuxièmes clients (220, 230).

4. Procédé selon l'une des revendications 1 à 3, comprenant en outre:
- la réception (350) d'un paquet de données avec une unité de données d'application de réponse de l'un des deuxièmes clients (220, 230) sur le serveur (200), et
- l'envoi (360) d'un paquet de données, avec l'unité de données d'application de réponse, contenue dans le paquet de données reçu, du serveur (200, 600) à au moins l'un des premiers clients (210).

5. Procédé selon la revendication 4, sachant que le serveur (200,600) envoie le paquet de données à l'au moins un premier client (210), en fonction de l'association.

6. Procédé selon l'une des revendications 1 à 5, sachant que les premiers clients (210) et les deuxièmes clients (220, 230) sont authentifiés par le serveur (200, 600) pour l'au moins une transmission d'unité de données d'application.

7. Procédé selon l'une des revendications 1 à 6, comprenant en outre:
- la vérification si un paquet de données, avec une unité de données d'application de commande de l'un des premiers clients (210), est reçu sur le serveur (200,600), si le premier client est autorisé quant à l'association, et / ou
- la vérification si un paquet de données avec une unité de données d'application de réponse de l'un des deuxièmes clients (220, 230) est reçu sur le serveur (200, 600), si le deuxième client est autorisé quant à l'association.

8. Procédé selon l'une des revendications 1 à 7, comprenant en outre
- l'accès à une carte à puce (640) par le biais de la transmission d'unité de données d'application.

9. Procédé selon l'une des revendications 1 à 8, sachant que l'unité de données d'application de commande contient une carte à puce (640).

10. Procédé selon l'une des revendications 1 à 9, sachant que l'unité de données d'application de réponse contient une réponse d'une carte à puce (640) à une instruction.

11. Procédé selon l'une des revendications 1 à 10, sachant que l'unité de données d'application de commande est une unité de données de protocole d'application de commande, Command-APDU, et sachant que l'unité de données d'application de réponse est une unité de données de protocole d'application de réponse, Response-APDU.

12. Procédé selon l'une des revendications 1 à 11, sachant que la réception et l'envoi des paquets de données sont effectués par le biais d'au moins un réseau (240) .

13. Procédé selon la revendication 12, sachant que la transmission des paquets de données est effectuée sur au moins un réseau (240), conformément à un protocole de transport transmettant les paquets, et / ou sachant que la transmission des paquets de données est effectuée chiffrée sur au moins un réseau (240).

14. Serveur (200), comprenant un ou plusieurs moyens pour l'exécution des étapes du procédé selon l'une des revendications 1 à 13.

15. Programme d'ordinateur, comprenant:
- des instructions de programme, qui incitent une installation de traitement de données (1) à exécuter les étapes du procédé selon l'une des revendications 1 à 13, quand le programme d'ordinateur est exécuté sur un processeur (100) de l'installation de traitement de données (1).
